# EUROPÄISCHE PATENTSCHRIFT

(11) **EP 2 658 905 B1**
(45) Veröffentlichungstag und Bekanntmachung des Hinweises auf die Patenterteilung: **16.09.2015**
(21) Anmeldenummer: 11807928.4
(22) Anmeldetag: 23.12.2011
(51) Int. Cl.: C08J 9/00, C08K 5/00, C08K 5/372, C08K 5/49, C09K 21/12

(54) **FLAMMSCHUTZSYSTEM**
FLAME-RETARDANT SYSTEM
SYSTEME IGNIFUGEANT

(30) Priorität: 27.12.2010 EP 10197052; 02.11.2011 EP 11187484
(43) Veröffentlichungstag der Anmeldung: 06.11.2013
(73) Patentinhaber: BASF SE, 67056 Ludwigshafen (DE)
(72) Erfinder: BELLIN, Ingo, 68307 Mannheim (DE); SPIES, Patrick, 67433 Neustadt (DE); FUCHS, Sabine, 68167 Mannheim (DE); FLECKENSTEIN, Christoph, 63579 Freigericht (DE); DEGLMANN, Peter, 68163 Mannheim (DE); HOFMANN, Maximilian, 68167 Mannheim (DE); OSTERMANN, Rainer, 67059 Ludwigshafen (DE); HAHN, Klaus, 67281 Kirchheim (DE); DENECKE, Hartmut, 67071 Ludwigshafen (DE); MASSONNE, Klemens, 67098 Bad Dürkheim (DE); JANSSENS, Geert, B-9100 Nieuwkerken-Waas (BE); DÖRING, Manfred, 76744 Wörth (DE); CIESIELSKI, Michael, 06217 Merseburg (DE); WAGNER, Jochen, 67112 Mutterstadt (DE)
(86) Internationale Anmeldenummer: PCT/EP2011/073958
(87) Internationale Veröffentlichungsnummer: WO 2012/089667

(56) Entgegenhaltungen:
- WO-A1-2011/000019
- WO-A1-2011/121001
- AT-A1- 508 303
- AT-A1- 508 304
- JP-A- 2004 277 609
- US-A- 3 284 544

## Beschreibung

Die Erfindung betrifft ein Flammschutzsystem enthaltend eine Phosphor- und eine Schwefelverbindung, eine Polymerzusammensetzung, insbesondere als Schaumstoff, enthaltend das Flammschutzmittel, Verfahren zur Herstellung der Polymerzusammensetzung und die Verwendung der geschäumten Polymerzusammensetzung als Isoliermaterial.

Die Ausrüstung von Polymeren, insbesondere Schaumstoffen, mit Flammschutzmitteln ist für eine Vielzahl von Anwendungen von Bedeutung, beispielsweise für Polystyrol-Partikelschaumstoffe aus expandierbarem Polystyrol (EPS) oder Polystyrol-Extrusionsschaumstoffplatten (XPS) zum Isolieren von Gebäuden.

Derzeit werden als Flammschutzmittel in Kunststoffen hauptsächlich polyhalogenierte Kohlenwasserstoffe, gegebenenfalls in Kombination mit geeigneten Synergisten, beispielsweise organischen Peroxiden oder stickstoffhaltigen Verbindungen eingesetzt. Ein typischer Vertreter dieser klassischen Flammschutzmittel ist Hexabrom-cyclododecan (HBCD), welches beispielsweise in Polystyrol Anwendung findet. Aufgrund von Bioakkumulation sowie Persistenz von einigen polyhalogenierten Kohlenwasserstoffen ist es ein großes Bestreben in der Kunststoffindustrie, halogenierte Flammschutzmittel zu substituieren.

Kombinationen von Schwefel mit Brom- und Phosphorverbindungen werden bereits in der DE-A 16 94 945 als Flammschutzsysteme für Polystyrolschäume vorgeschlagen.

In der EP-A 0 806 451 sind neben elementaren Schwefel auch Dialkylpolysulfide als Synergisten für phosphororganische Flammschutzmittel zum Einsatz in expandierbaren (EPS) und extrudierten (XPS) Polystyrolschäumen offenbart.

In der WO 2009/035881 sind Phosphor-Schwefel-Verbindungen beschrieben, die gegebenenfalls Di- oder Polysulfidgruppen aufweisen.

In der AT 508 304 A1 werden flammgeschützte, expandierbare Polymerisate beschrieben, welche als Flammschutzmittel eine sich von DOPO (9,1-Dihydro-9-oxa-10-phosphaphenantren-10-oxid) ableitende Phosphorverbindung sowie als zusätzliches Flammschutzmittel bzw. -synergisten Schwefel und/oder eine schwefelhaltige Verbindung enthalten.

AT 508 303 A1 betrifft halogenfrei flammgeschützte, expandierbare Polymerisate, welche ein Flammschutzmittelsystem enthalten, welches mindestens eine Phosphorverbindung als Flammschutzmittel sowie mindestens eine Schwefelverbindung als Synergisten umfasst.

In der US 3,284,433 A werden Harze beschrieben, welche eine Kombination aus organischen Halogeniden und organischen Disulfiden als Flammschutzmittel enthalten.

JP 2004 277609 A beschreibt ein flammgeschütztes thermoplastisches Harz, welches neben Schwefel eine borhaltige Verbindung enthält.

Obwohl mit den bekannten Systemen bereits gute Ergebnisse erzielt werden, besteht doch ein breiter Raum für Verbesserungen, insbesondere was die Herstellung, anwendungstechnische Eigenschaften und Wechselwirkungen zwischen verschiedenen Zusätzen der zu schützenden Materialen angeht. So müssen z. B. erhöhte Mengen des konventionellen Flammschutzmittels HBCD eingesetzt werden, wenn zusätzlich athermane Stoffe wie Kreide oder Graphit anwesend sind.

Aufgabe ist es daher, weitere Flammschutzsysteme bereitzustellen, die zumindest in Teilbereichen Verbesserungen bringen oder die Nachteile der bekannten Systeme vermindern.

Es wurde gefunden, dass Flammschutzsysteme, die neben einer organischen Phosphorverbindung als Flammschutzmittel ein Oligo- oder Polysulfid als Flammschutzsynergisten enthalten, insbesondere beim Einsatz in Polymerschäumen hervorragende Eigenschaften aufweisen. Solche Verbindungen sind teilweise aus US 3,968,062, US 4,873,290 und US 2010/0249278A1 als Vulkanisierhilfsmittel bekannt. Einer Eignung als Flammschutzsynergisten lässt sich aus diesen Schriften nicht ableiten.

Gegenstand der Erfindung ist daher ein Flammschutzsystem, enthaltend
a) mindestens eine Schwefelverbindung der Formel (I), 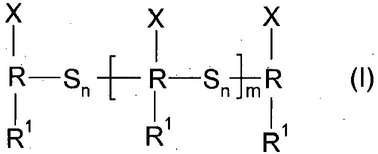 wobei die Symbole und Indizes folgende Bedeutungen haben:
   - R: ist C₆-C₁₂-Aryl oder eine 5-10 gliedrige Heteroarylgruppe, die 1 bis 3 Heteroatome aus der Gruppe N, O und S enthält;
   - X: ist OR², SR², NR²R³, COOR², CONR²R³ SO₂R², F, Cl, Br, H oder eine Gruppe Y¹-P(Y²)ₚ R'R";
   - Y¹: ist O, oder S;
   - Y²: ist O oder S;
   - p: ist 0 oder 1;
   - R', R": sind gleich oder verschieden, C₁-C₁₈-Alkyl, C₂-C₁₈-Alkenyl, C₂-C₁₈-Alkinyl, C₆-C₁₂-Aryl, C₃-C₁₀-Cycloalkyl C₆-C₁₂-Aryl-C₁-C₁₈-Alkyl, O-(C₁-C₁₈)-Alkyl, O-(C₆-C₁₂)-Aryl, O-(C₃-C₁₀)-Cycloalkyl oder (C₆-C₁₂)-Aryl-(C₁-C₁₈)-Alkyl-O;
   - R¹: ist C₁-C₁₈-Alkyl, C₂-C₁₈-Alkenyl, C₃-C₁₈-Alkinyl, C₃-C₁₀-Cycloalkyl, O-(C₁-C₁₈)-Alkyl, O-(C₂-C₁₈)-Alkenyl, O-(C₃-C₁₈)-Alkinyl oder O-(C₃-C₁₀)-Cycloalkyl ;
   - R², R³: sind gleich oder verschiedenH, C₁-C₁₈-Alkyl, C₂-C₁₈-Alkenyl, C₃-C₁₈-Alkinyl, C₆-C₁₀-Aryl, C₃-C₁₀-Cycloalkyl oder C₆-C₁₀-Aryl-C₁-C₁₈-Alkyl;
   - n: ist eine ganze Zahl von 2 bis 6 und
   - m: ist eine Zahl von 2 bis 500;
b) mindestens eine halogenfreie organische Phosphorverbindung mit einem Phosphorgehalt im Bereich von 0,5 bis 40 Gew.-%, bezogen auf die Phosphorverbindung, wobei die Phosphorverbindung(en) b) gewählt sind aus
b') Phosphorverbindungen der Formel (II),

   (X¹)ₛ =PR⁴R⁵R⁶ (II)

   wobei die Symbole und Indizes in der Formel (II) folgende Bedeutungen haben:
   - R⁴: ist C₁-C₁₆-Alkyl, C₁-C₁₀-Hydroxyalkyl, C₂-C₁₆-Alkenyl, C₁-C₁₆-Alkoxy, C₁-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR¹², COR¹³, COOR¹⁴, CONR¹⁵R¹⁶;
   - R⁵: ist C₁-C₁₆-Alkyl, C₁-C₁₀-Hydroxyalkyl, C₁-C₁₆-Alkenyl, C₁-C₁₆-Alkoxy, C₁-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR¹², COR¹³, COOR¹⁴, CONR¹⁵R¹⁶;
   - R⁶: ist H, SH, SR⁷, OH, OR⁸ oder eine Gruppe

   -(Y³)ᵥ-[P(= X²)ᵤR⁹-(Y⁴)ₖ]ₗ-P(= X³)ₜR¹⁰R¹¹;

   wobei zwei Gruppen R⁴, R⁵, R⁶ zusammen mit dem Phosphoratom, an das sie gebunden sind, kein Ringsystem bilden;
   - X¹, X², X³: sind gleich oder verschieden unabhängig voneinander O oder S;
   - Y³, Y⁴: sind gleich oder verschieden O oder S;
   - R⁷, R⁸, R¹², R¹³, R¹⁴, R¹⁵, R¹⁶: sind gleich oder verschieden C₁-C₁₂-Alkyl, C₃-C₈-Cycloalkyl, das unsubstituiert oder durch eine oder mehrere C₁-C₄-Alkylgruppen substituiert ist, C₂-C₁₂-Alkenyl, C₂-C₁₂-Alkinyl, C₆-C₁₀-Aryl, C₆-C₁₀-Aryl-C₁-C₄-alkyl oder Hydroxy-(C₁-C₁₈)-alkyl;
   - R⁹, R¹⁰, R¹¹: sind gleich oder verschieden unabhängig voneinander C₁-C₁₆-Alkyl, C₂-C₁₆-Alkenyl, C₁-C₁₆-Alkoxy, C₁-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR¹², COR¹³, COOR¹⁴, CONR¹⁵R¹⁶,
   - k, v: sind 0 oder 1, falls Y³ bzw. Y⁴ O ist, und 1, 2, 3, 4, 5, 6, 7 oder 8, falls Y² bzw. Y⁴ S ist, und
   - l: ist eine ganze Zahl von 0 bis 100;
   - s, t, u: sind unabhängig voneinander 0 oder 1;
b") Phosphorverbindungen der Formel (III), 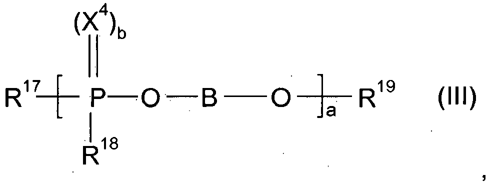 wobei die Symbole in der Formel (III) folgende Bedeutungen haben:
   - B: ist eine Gruppe

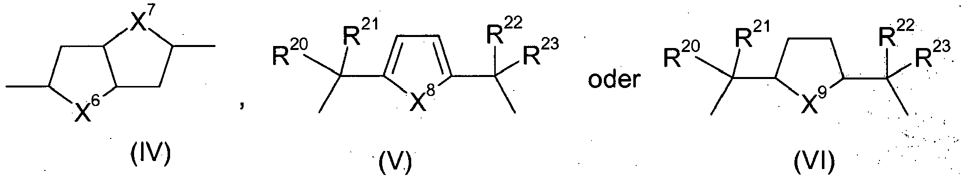

   - R¹⁹: ist -P(=X⁵)_{c}R²⁴R²⁵, H, eine geradkettige oder verzweigte C₁-C₁₂-Alkylgruppe, C₅-C₆-Cycloalkyl, C₆-C₁₂-Aryl, Benzyl, wobei die vier letztgenannten Gruppen unsubstituiert oder durch einen oder mehrere Reste aus der Gruppe C₁-C₄-Alkyl und C₂-C₄-Alkenyl substituiert sind;
   - R¹⁷, R¹⁸, R²⁴ und R²⁵: sind gleich oder verschieden Wasserstoff, OH, C₁-C₁₆-Alkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR²⁶ COR²⁷, COOR²⁸, CONR²⁹R³⁰ oder zwei Reste R¹⁷, R¹⁸, R²⁴, R²⁵ bilden zusammen mit dem Phosphoratom, an das sie gebunden sind, oder einer Gruppe P-O-B-O-P ein Ringsystem;
   - R²⁰, R²¹, R²², R²³: sind gleich oder verschieden H, C₁-C₁₆-Alkyl, C₂-C₁₆-Alkenyl, C₁-C₁₆-Alkoxy, C₂-C₁₆-Alkenoxy;
   - R²⁶, R²⁷, R²⁸, R²⁹, R³⁰: sind gleich oder verschieden H, C₁-C₁₆-Alkyl, C₂-C₁₆-Alkenyl, C₆-C₁₀-Aryl, C₆-C₁₀-Aryl-C₁-C₁₆-Alkyl, C₆-C₁₀-Aryl-C₁-C₁₆-Alkoxy;
   - X⁴, X⁵: sind gleich oder verschieden S oder O;
   - b, c: sind gleich oder verschieden, vorzugsweise gleich, 0 oder 1;
   - X⁶, X⁷, X⁸, X⁹: sind gleich oder verschieden S oder O und
   - a: ist eine natürliche Zahl von 1 bis 50.
b"') oligomeren oder polymeren Phosphaten der Formel (VII), 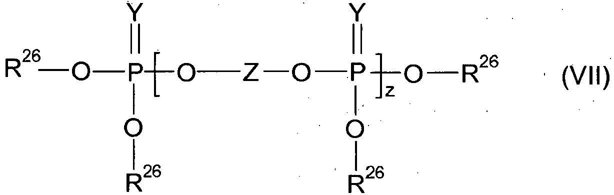 wobei die Symbole und Indizes folgende Bedeutungen haben:
   - R²⁶,R²⁷,R²⁸,R²⁹: sind gleich oder verschieden H, lineares oder verzweigtes C₁-C₁₆-Alkyl, lineares oder verzweigtes C₂-C₁₆-Alkenyl, lineares oder verzweigtes C₂-C₁₆-Alkinyl, C₃-C₁₀-Cycloalkyl, C₆-C₁₀-Aryl, Heteroaryl oder C₆-C₁₀-Aryl-C₁-C₁₀-Alkyl, wobei Aryl in den Resten R²⁶ - R²⁸ jeweils unabhängig voneinander unsubstituiert oder mit 1 bis 3 Resten aus der Gruppe C₁-C₁₀-Alkyl, C₁-C₁₀-Alkoxy, C₆-C₁₀-Aryl, C₆-C₁₀-Aryloxy, OH, CHO, COOH, CN, SH, SCH₃, SO₂CH₃, SO₂-C₆-C₁₀-Aryl, SO₃H, COCH₃, COC₂H₅, CO-C₆-C₁₀-Aryl und S-S-C₆-C₁₀-Aryl substituiert ist,
   oder
   - R²⁶,R²⁷,R²⁸,R²⁹: sind ein kationischer Rest aus der Gruppe der Metalle und stickstoffhaltigen Kationen,
   - Z: ist

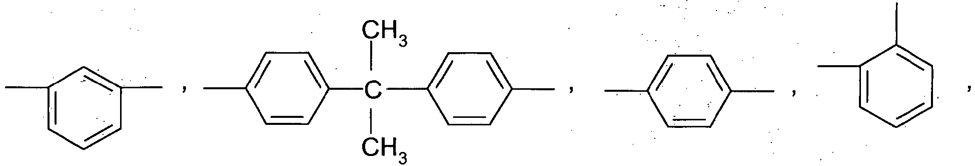

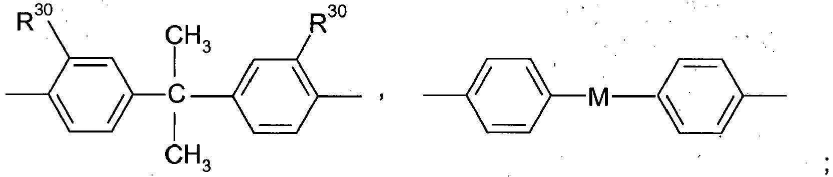

   - M: ist -CH₂-, -C(CF₃)₂-, -C(CH₃)(C₆H₅)-, -C(CH₃)(C₂H₅)-, -C(C₆H₅)₂-1,3-Phenylen-C(CH₃)₂-, -C(CH₃)₂-1,4-Phenylen-C(CH₃)₂-,

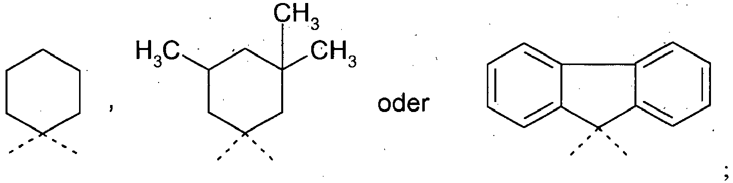

   - R³⁰: ist -CH₃, -CH(CH₃)₂ oder C₆H₅ und
   - n: ist 1 bis 100;
b"") oligomeren oder polymeren Phosphonaten der Formel (VIII), 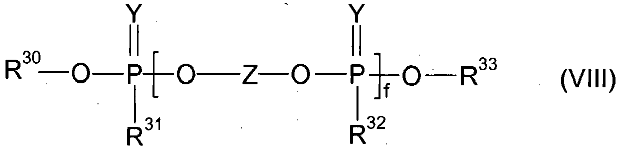 wobei die Symbole und Indizes folgende Bedeutungen haben:
   R³⁰, R³¹, R³², R³³ sind gleich oder verschieden H, lineares oder verzweigtes C₁-C₁₆-Alkyl, lineares oder verzweigtes C₂-C₁₆-Alkenyl, lineares oder verzweigtes C₂-C₁₆-Alkinyl, C₃-C₁₀-Cycloalkyl, C₆-C₁₀-Aryl, Heteroaryl oder C₆-C₁₀-Aryl-C₁-C₁₀-Alkyl; wobei Aryl in den Resten R³⁰ - R³³ jeweils unabhängig voneinander unsubstituiert oder mit 1 bis 3 Resten aus der Gruppe C₁-C₁₀-Alkyl, C₁-C₁₀Alkoxy, C₆-C₁₀-Aryl, C₆-C₁₀-Aryloxy, OH, CHO, COOH, CN, SH, SCH₃, SO₂CH₃, SO₂-C₆-C₁₀-Aryl, SO₃H, COCH₃, COC₂H₅, CO-C₆-C₁₀-Aryl und S-S-C₆-C₁₀-Aryl substituiert ist;

   - Z: ist 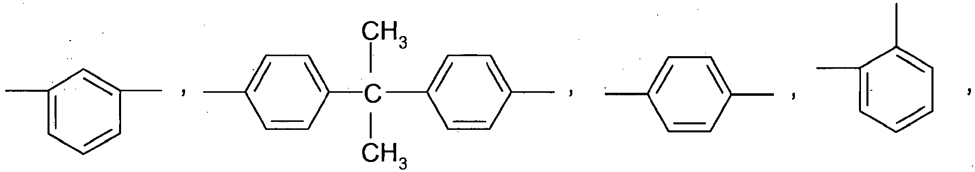 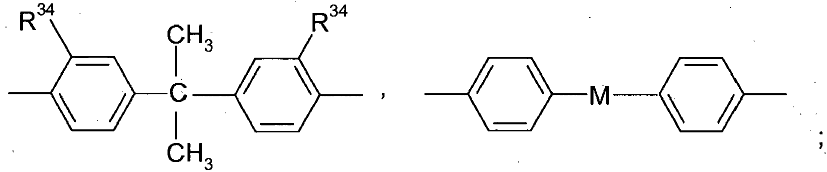
   - M: ist -CH₂-, -C(CF₃)₂-, -C(CH₃)(C₆H₅)-, -C(CH₃)(C₂H₅)- -C(C₆H₅)₂-1,3-Phenylen-C(CH₃)₂-, -C(CH₃)₂-1,4-Phenylen-C(CH₃)₂-, -O-, -S-, 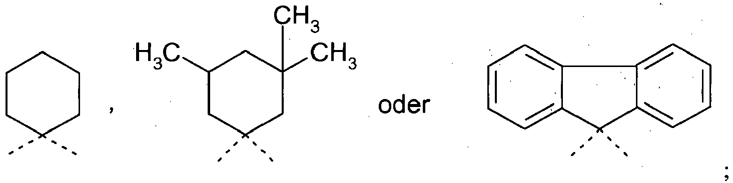
   - R³⁴: ist -CH₃, -CH(CH₃)₂ oder C₆H₅ und
   - f: ist 1 bis 1000.

Weiterhin Gegenstand der Erfindung ist die Verwendung einer Mischung des Flammschutzsynergisten a) und des Flammschutzmittels b) als Flammschutzsystem.

Ein weiterer Gegenstand der Erfindung ist eine Polymerzusammensetzung, bevorzugt ein Polymerschaum, besonders bevorzugt ein Polymerschaum auf Basis eines Styrolpolymers, enthaltend ein oder mehrere Polymere und das erfindungsgemäße Flammschutzsystem.

Ebenso Gegenstand der Erfindung ist ein Verfahren zur flammhemmenden Ausrüstung von geschäumten oder ungeschäumten Polymeren, wobei man eine Schmelze des Polymers oder die Monomere, aus denen das Polymer erzeugt wird, mit dem erfindungsgemäßen Flammschutzsystem vermischt.

Gegenstand der Erfindung ist auch die Verwendung der erfindungsgemäßen Polymerzusammensetzung als Dämm- und/oder Isoliermaterial insbesondere in der Bauindustrie. Gegenstand der Erfindung ist auch die Verwendung der erfindungsgemäßen Polymerzusammensetzung als Verpackungsmaterial.

Das erfindungsgemäße Flammschutzsystem zeichnet sich beispielsweise durch eine verbesserte Prozessierbarkeit bei der Herstellung von Schaumstoffen basierend auf Styrolpolymeren aus. Es eignet sich insbesondere zum Brandschutz von Schäumen mit geringer Dichte.

Vorteilhaft ist es, dass bei Zusatz athermaner Verbindungen die Wirkung als Flammschutzsystem im Allgemeinen nicht beeinflusst wird.

Das erfindungsgemäße Flammschutzsystem enthält eine oder mehrere, vorzugsweise 1 bis 3, besonders bevorzugt 1 Verbindung der Formel (I).

Bevorzugt sind Verbindungen der Formel (I), in denen alle Symbole und Indizes die bevorzugten Bedeutungen haben.

Bevorzugt sind auch Verbindungen der Formel (I), in denen die Symbole und Indizes die bevorzugten Bedeutungen haben und R¹ C₆-C₁₂-Aryl ist.

Besonders bevorzugt haben die Symbole und Indizes in der Formel (I) folgende Bedeutungen:
- R: ist besonders bevorzugt C₆-C₁₀-Aryl.
- X: ist besonders bevorzugt OR², SR², NR²R³, COOR², COONR²R³, SO₂R² oder eine Gruppe Y¹-P(Y²)ₚR'R".
- Y¹: ist besonders bevorzugt O oder S.
- Y²: ist besonders bevorzugt O oder S.
- p: ist besonders bevorzugt 0 oder 1.
- R', R": sind besonders bevorzugt gleich und sind C₁-C₁₈-Alkyl, C₆-C₁₂-Aryl, O-(C₁-C₁₈)-Alkyl oder O-(C₆-C₁₂-Aryl).
- R¹: ist besonders bevorzugt C₁-C₁₆-Alkyl.
- R², R³: sind besonders bevorzugt gleich und sind H, C₁-C₁₈-Alkyl oder C₆-C₁₂-Aryl.
- n: ist besonders bevorzugt eine ganze Zahl von 2 bis 4.
- m: ist besonders bevorzugt eine Zahl von 2 bis 250.

Besonders bevorzugt sind Verbindungen der Formel (I), in denen alle Symbole und Indizes die besonders bevorzugten Bedeutungen haben.

Ganz besonders bevorzugt haben die Symbole und Indizes in der Formel (I) folgende Bedeutungen:
- R: ist ganz besonders bevorzugt Phenyl.
- X: ist ganz besonders bevorzugt OR² oder eine Gruppe O-P(O)ₚR'R".
- p: ist ganz besonders bevorzugt 0 oder 1.
- R', R": sind ganz besonders bevorzugt gleich und sind C₁-C₆-Alkyl, C₆-C₁₂-Aryl, O-(C₁-C₆)-Alkyl oder O-(C₆-C₁₂)-Aryl.
- R¹: ist ganz besonders bevorzugt eine C₁-C₁₀- Alkylgruppe.
- R²: ist ganz besonders bevorzugt H oder eine C₁-C₆-Alkylgruppe.
- n: ist ganz besonders bevorzugt eine ganze Zahl von 2 bis 3.
- m: ist ganz besonders bevorzugt eine Zahl von 3 bis 150.

Ganz besonders bevorzugt sind Verbindungen der Formel (I), bei denen alle Symbole und Indizes die ganz besonders bevorzugten Bedeutungen haben. Ebenso ganz besonders bevorzugt beträgt der Schwefelgehalt der Schwefelverbindungen (I) 15 bis 40 Gew.-%, bezogen auf die Schwefelverbindung (I).

Insbesondere bevorzugt haben die Symbole und Indizes in der Formel (I) folgende Bedeutungen:
- R: ist insbesondere bevorzugt Phenyl, bei dem die Gruppen X und R¹ in paraStellung stehen.
- X: ist insbesondere bevorzugt OH oder eine Gruppe O-P(O)(O-Phenyl)₂.
- R¹: ist insbesondere bevorzugt t-C₄H₉ oder t-C₅H₁₁.
- n: ist insbesondere bevorzugt 2.
- m: ist insbesondere bevorzugt eine Zahl von 3 bis 100.

Insbesondere bevorzugt sind Verbindungen der Formel (I), bei denen alle Symbole und Indizes die insbesondere bevorzugten Bedeutungen haben.

Weiterhin insbesondere bevorzugt sind die in den Beispielen aufgeführten Verbindungen Poly-(*tert*-Butylphenoldisulfid), Poly-(*tert*-Amylphenol-disulfid) und mit Diphenylphosphatgruppen phosphatiertes Poly-(tert.-Butylphenoldisulfid).

Der Schwefelgehalt der Schwefelverbindungen (I) beträgt vorzugsweise 5 bis 80 Gew.-%, besonders bevorzugt 10 bis 60 Gew.-%, ganz besonders bevorzugt 15 bis 40 Gew.-%, bezogen auf die Schwefelverbindung (I). Das Molekulargewicht der Schwefelverbindungen (I) beträgt vorzugsweise mindestens 500 g/mol.

Poly-(tert-Butylphenoldisulfid) und Poly-(tert-Amylphenoldisulfid) sind von Arkema, Colombes, Frankreich, kommerziell erhältlich. Die Synthese solcher Verbindungen ist beispielsweise in der US 3,968,062 beschrieben.

Das Gewichtverhältnis von Schwefelverbindung(en) a) zu Phosphorverbindung(en) b) beträgt 1 : 10 bis 10 :1, bevorzugt 1 : 8 - 8 :1, besonders bevorzugt 1 : 5 bis 5 : 1. Als Komponente b) enthält das erfindungsgemäße Flammschutzsystem eine oder mehrere, vorzugsweise 1 bis 3, besonders bevorzugt 1 oder 2, insbesondere 1, Phosphorverbindung mit einem Phosphorgehalt im Bereich von 5 bis 80 Gew.-%, bezogen auf Phosphorverbindung.

Geeignete Phosphorverbindungen sind beispielsweise Phosphate, Phosphonate, wie DOPO (9,10-Dihydro-9-oxa-10-phosphaphenanthren-10-oxid) und DOPO-Derivate, Phosphinate, Phosphite und Phosphinite. Beispielsweise sind dies kommerzielle Produkte wie Exolit^{®} OP 930, Exolit^{®} OP 1312, HCA, HCA-HQ, Cyagard^{®} RF-1243, Fyrol^{®} PMP, Phoslite^{®} IP-A und Budit^{®} 833.

Bevorzugt haben die Symbole und Indizes in Phosphorverbindungen der Formel (II) folgende Bedeutungen:
- R⁴: ist bevorzugt C₁-C₁₆-Alkyl, C₁-C₁₀-Hydroxyalkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy.
- R⁵: ist bevorzugt C₁-C₁₆-Alkyl, C₁-C₁₀-Hydroxyalkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryl-C₁-C₁₆-Alkyl, C₆-C₁₀-Aryl-C₁-C₁₆-Alkoxy.
- R⁶: ist bevorzugt H, SH, SR⁷, OH, OR⁸ oder eine Gruppe: -(Y³)ᵥ-[P(= X²)ᵤR⁹ -(Y⁴)ₖ]ₗ-P(= X³)ₜR¹⁰R¹¹.
- X¹, X² und X³: sind bevorzugt gleich oder verschieden unabhängig voneinander O oder S.
- Y³, Y⁴: sind bevorzugt gleich oder verschieden O oder S.
- R⁷, R⁸: sind bevorzugt gleich oder verschieden C₁-C₁₂-Alkyl, C₃-C₈-Cycloalkyl, das unsubstituiert oder durch eine oder mehrere C₁-C₄-Alkylgruppen substituiert ist, C₂-C₁₂-Alkenyl, C₂-C₁₂-Alkinyl, C₆-C₁₀-Aryl oder C₆-C₁₀-Aryl-C₁-C₄-alkyl.
- R⁹, R¹⁰, R¹¹: sind bevorzugt gleich oder verschieden unabhängig voneinander C₁-C₁₆-Alkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR¹², COR¹³, COOR¹⁴, CONR¹⁵R¹⁶.
- k, v: sind bevorzugt 1, falls Y³ bzw. Y⁴ O ist, und 1 oder 2, falls Y³ bzw. Y⁴ S ist.
- l: ist bevorzugt eine ganze Zahl von 0 bis 10.
- s, t, u: sind bevorzugt 1.

Bevorzugt sind Verbindungen der Formel (II), in denen alle Symbole und Indizes die bevorzugten Bedeutungen haben.

Besonders bevorzugt haben die Symbole und Indizes in der Formel (II) folgende Bedeutungen:
- R⁴: ist besonders bevorzugt C₁-C₈-Alkyl, C₁-C₈-Alkoxy, Cyclohexyl, Phenyl, Phenoxy, Benzyl, Benzyloxy.
- R⁵: ist besonders bevorzugt C₁-C₈-Alkyl, C₁-C₈-Alkoxy, Cyclohexyl, Phenyl, Benzyl, Benzyloxy.
- R⁶: ist besonders bevorzugt H, SH, SR⁷, OH, OR⁸ oder eine Gruppe -(Y³)ₖ-P(= X³)ₜR¹⁰R¹¹.
- X¹ und X³: sind besonders bevorzugt gleich oder verschieden O oder S.
- Y³: ist besonders bevorzugt O oder S.
- R⁷, R⁸: sind besonders bevorzugt gleich oder verschieden C₁-C₈-Alkyl, Cyclohexyl, Phenyl oder Benzyl.
- R¹⁰, R¹¹: sind besonders bevorzugt gleich oder verschieden C₁-C₈-Alkyl, C₁-C₈-Alkoxy, Cyclohexyl, Phenyl, Phenoxy, Benzyl und Benzyloxy.
- k: ist besonders bevorzugt 1, falls Y³ O ist, und 1 oder 2, falls Y³ S ist.
- s und t: sind besonders bevorzugt 1.

Besonders bevorzugt sind Verbindungen der Formel (II), bei denen die Symbole und Indizes die besonders bevorzugten Bedeutungen haben.

Insbesondere bevorzugt haben die Symbole und Indizes in der Formel (II) folgende Bedeutungen:
- R⁴: ist insbesondere bevorzugt Phenyl oder Phenoxy.
- R⁵: ist insbesondere bevorzugt Phenyl.
- R⁶: ist insbesondere bevorzugt H, SH, SR⁷, OH, OR⁸ oder eine Gruppe -(Y³)ₖ-P(= X³)ₜR¹⁰R¹¹.
- X¹ und X³: sind insbesondere bevorzugt gleich oder verschieden O oder S.
- Y³: ist insbesondere bevorzugt O oder S.
- R⁷, R⁸: sind insbesondere bevorzugt gleich oder verschieden Cyclohexyl, Phenyl oder Benzyl.
- R¹⁰, R¹¹: sind insbesondere bevorzugt gleich oder verschieden Phenyl, Phenoxy.
- k: ist insbesondere bevorzugt 1, falls Y³ O ist, und 1 oder 2, falls Y³ S ist.
- s und t: sind insbesondere bevorzugt 1.

Insbesondere bevorzugt sind Verbindungen der Formel (II), in denen die Symbole und Indizes die insbesondere bevorzugten Bedeutungen haben.

Weiterhin insbesondere bevorzugt sind Verbindungen der Formel (II), in denen die Symbole und Indizes die insbesondere bevorzugten Bedeutungen haben und R⁵ Phenoxy ist.

Weiterhin bevorzugt sind folgende Gruppen von Verbindungen der Formel (II):

S=PR⁴R⁵-H (IIa)

S=PR⁴R⁵-SH (IIb)

S=PR⁴R⁵-OH (IIc)

S=PR⁴R⁵-S-Phenyl (IId)

S=PR⁴R⁵-O-Phenyl (IIe)

S=PR⁴R⁵-S-Benzyl (IIf)

S=PR⁴R⁵-O-Benzyl (IIg)

S=PR⁴R⁵-P(= S)R¹⁰R¹¹ (IIh)

S=PR⁴R⁵-S-P(= S)R¹⁰R¹¹ (IIi)

S=PR⁴R⁵-S-S-P(= S)R¹⁰R¹¹ (IIj)

S=PR⁴R⁵-O-P(= S)R¹⁰R¹¹ (IIk)

O=PR⁴R⁵-H (IIl)

O=PR⁴R⁵-SH (IIm)

O=PR⁴R⁵-OH (IIn)

O=PR⁴R⁵-S-Phenyl (IIo)

O=PR⁴R⁵-O-Phenyl (IIp)

O=PR⁴R⁵-S-Benzyl (IIq)

O=PR⁴R⁵-P(=S)R¹⁰R¹¹ (IIr)

O=PR⁴R⁵-S-P(=S)R¹⁰R¹¹ (IIs)

O=PR⁴R⁵-S-S-P(=S)R¹⁰R¹¹ (IIt)

O=PR⁴R⁵-O-P(=S)R¹⁰R¹¹ (IIu)

O=PR⁴R⁵-P(=O)R¹⁰R¹¹ (IIv)

O=PR⁴R⁵-S-P(=O)R¹⁰R¹¹ (IIw)

O=PR⁴R⁵-S-S-P(=O)R¹⁰R¹¹ (IIx)

O=PR⁴R⁵-O-P(=O)R¹⁰R¹¹ (IIy)

wobei die Symbole die in der Formel (II) angegebenen Bedeutungen haben.

Insbesondere bevorzugt sind die folgenden Komponenten b),

| | |
|---|---|
| 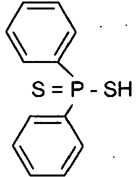 | Diphenyldithiophosphinsäure |
| 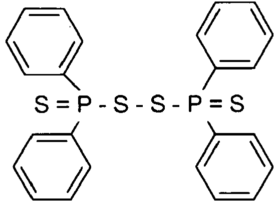 | Bis(diphenylphosphinthioyl)disulfid |
| 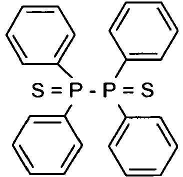 | 1,1,2,2-Tetraphenyldiphosphindisulfid |
| O=P(O-Ph)₃ | Triphenylphosphat |

Weiterhin bevorzugte Phosphorverbindungen sind solche der Formel (III), wobei die Symbole in der Formel (III) folgende Bedeutung haben:
B ist bevorzugt eine Gruppe der Formel (IV), (V) oder (VI).
R¹⁹ ist bevorzugt (X⁵)_{c}PR²⁴R²⁵ oder H.
R¹⁷, R¹⁸, R²⁴, R²⁵ sind bevorzugt gleich oder verschieden C₆-C₁₀-Aryl, C₆-C₁₀-Aryloxy, C₆-C₁₀-Aryl-C₁-C₁₆-Alkyl oder C₆-C₁₀-Aryl-C₁-C₁₆-Alkoxy.
R²⁰, R²¹, R²², R²³ sind bevorzugt H, C₁-C₁₆-Alkyl, C₂-C₁₆-Alkenyl, C₁-C₁₆-Alkoxy, C₁-C₁₆-Alkenoxy,
X⁴, X⁵ sind bevorzugt gleich oder verschieden S oder O.
b, c sind bevorzugt gleich 0 oder 1.
X⁶, X⁷, X⁸, X⁹ sind bevorzugt O.
a ist bevorzugt eine natürliche Zahl von 1 bis 30.

Bevorzugt sind Verbindungen der Formel (III), in denen alle Symbole die bevorzugten Bedeutungen haben.

Besonders bevorzugt haben die Symbole in der Formel (III) folgende Bedeutung:
B ist besonders bevorzugt eine Gruppe der Formel (IV), (V) oder (VI).
R¹⁹ ist besonders bevorzugt (X⁵)_{c}PR²⁴R²⁵.
R¹⁷, R¹⁸, R²⁴, R²⁵ sind besonders bevorzugt gleich oder verschieden Phenyl, Phenoxy, Phenyl-C₁-C₁₆-Alkyl, Phenyl-C₁-C₁₆-Alkoxy.
R²⁰, R²¹, R²², R²³ sind besonders bevorzugt H.
X⁴, X⁵ sind besonders bevorzugt gleich oder verschieden S oder O.
b, c sind besonders bevorzugt gleich 0 oder 1.
X⁶, X⁷, X⁸, X⁹ sind besonders bevorzugt O.
a ist besonders bevorzugt 1.

Besonders bevorzugt sind Verbindungen der Formel (III), in denen alle Symbole und Indizes die besonders bevorzugten Bedeutungen haben.

Bevorzugt sind Verbindungen der Formel (III), in denen R¹⁷ und R¹⁸ gleich sind.

Weiterhin bevorzugt sind Verbindungen der Formel (III), in denen R¹⁷ und R²⁴ oder R¹⁷ und R²⁵ gleich sind. Weiterhin besonders bevorzugt sind Verbindungen der Formel (III), in denen R¹⁸ und R²⁴ oder R¹⁸ und R²⁵ gleich sind.

Weiter bevorzugt sind Verbindungen, in denen R¹⁷, R¹⁸, R²⁴ und R²⁵ gleich sind.

Insbesondere bevorzugt haben die Symbole und Indizes in der Formel (III) folgende Bedeutung:
B ist insbesondere bevorzugt eine Gruppe der Formel (IV), (V) oder (VI).
R¹⁹ ist insbesondere bevorzugt (X⁵)_{c}PR²⁴R²⁵.
R¹⁷, R¹⁸, R²⁴, R²⁵ sind insbesondere bevorzugt gleich und sind Phenyl oder Phenoxy.
R²⁰, R²¹, R²², R²³ sind insbesondere bevorzugt H.
X⁴, X⁵ sind insbesondere bevorzugt gleich S oder O.
b, c sind insbesondere bevorzugt gleich und sind 0 oder 1.
X⁶, X⁷, X⁸, X⁹ sind insbesondere bevorzugt Sauerstoff.
a ist insbesondere bevorzugt 1.

Insbesondere bevorzugt sind Verbindungen der Formel (III), in denen alle Symbole und Indizes die insbesondere bevorzugten Bedeutungen haben.

Bevorzugt sind auch Verbindungen der Formel (III), in denen jeweils zwei der Reste R¹⁷, R¹⁸, R²⁴, R²⁵ zusammen mit dem Phosphoratom, an das sie gebunden sind, oder der Gruppe P-O-B-O-P- ein drei- bis zwölfgliedriges Ringsystem bilden.

Bevorzugt sind weiterhin Verbindungen der Formel (III), in denen zwei Reste R¹⁷, R¹⁸, R²⁴, R²⁵ zusammen kein Ringsystem bilden.

Weiterhin insbesondere bevorzugt sind die folgenden Verbindungen der Formel (III):

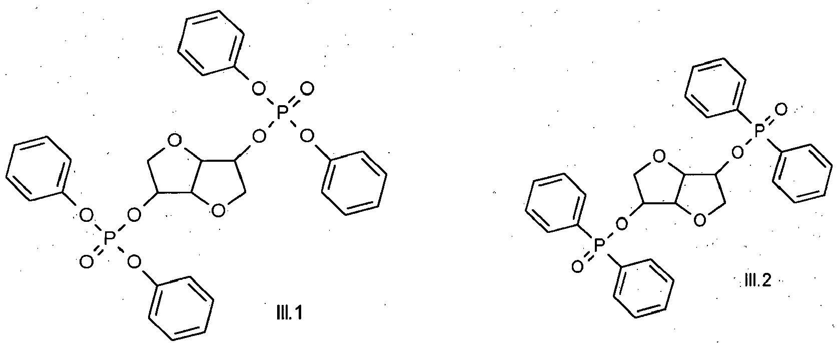

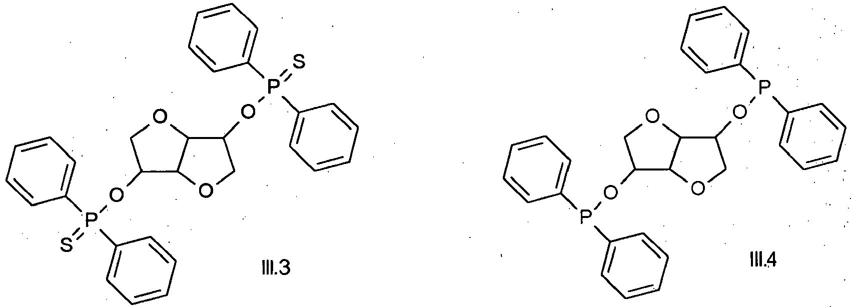

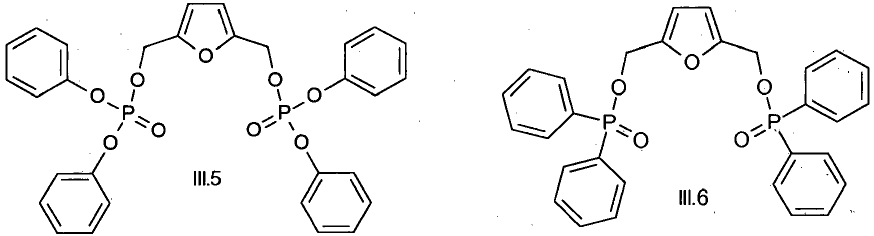

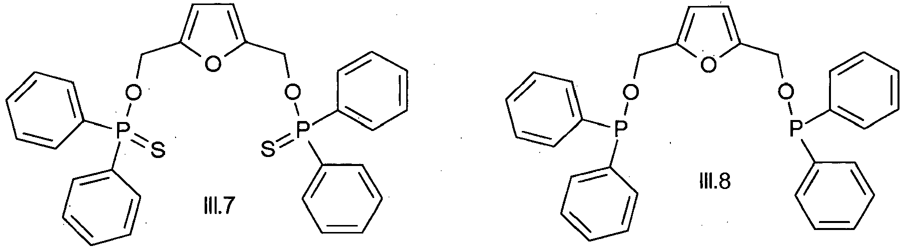

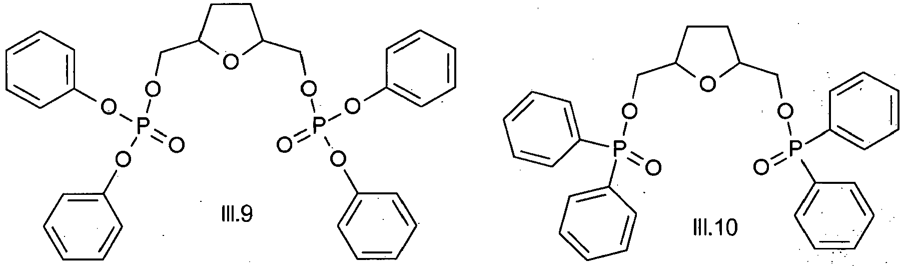

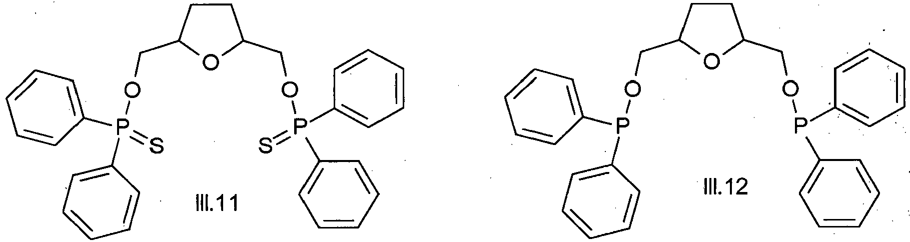

Die Verbindungen der Formel (III) sind teilweise aus der Literatur bekannt. Die Synthese gelingt beispielsweise durch Umsetzung der entsprechenden furan- oder thiophen-basierten Diolgrundkörper mit Chlorphosphorverbindungen in Gegenwart einer Base. Der zugrundeliegende Reaktionstyp der Umsetzung von Chlorphosphorverbindungen mit Alkoholen ist in der Literatur weitreichend bekannt [siehe z.B. WO-A 2003/062251; Dhawan, Balram; Redmore, Derek, J. Org. Chem. (1986), 51(2), 179-83; WO 96/17853; Kumar, K. Ananda; Kasthuraiah, M.; Reddy, C. Suresh; Nagaraju, C, Heterocyclic Communications (2003), 9(3), 313-318; Givelet, Cecile; Tinant, Bernard; Van Meervelt, Luc; Buffeteau, Thierry; Marchand-Geneste, Nathalie; Bibal, Brigitte. J. Org. Chem. (2009), 74(2), 652-659.]

Die furan- oder thiophenbasierten Diol-Grundkörper sind größtenteils kommerziell erhältlich oder können leicht nach literaturbekannten Methoden ausgehend von Zuckern dargestellt werden [siehe z.B.: WO 2006/063287 (Darstellung von 2,5-Bis(hydroxy-methyl)tetrahydrofuran); Cottier, Louis; Descotes, Gerard; Soro, Yaya. Synth. Comm. (2003), 33(24), 4285 - 4295),(Darstellung von 2,5-Bis(hydroxymethyl)furan); CA 2196632, Katritzky, Alan R.; Zhang, Zhongxing; Lang, Hengyuan; Jubran, Nusrallah; Leichter, Louis M.; Sweeny, Norman. J. Heterocycl. Chem. (1997), 34(2), 561-565].

Auch die Darstellung von in 2,5-Position substituierten furanbasierten Derivaten ist in der Literatur wohlbekannt (R⁵ -R⁸ ganz oder teilweise gleich oder verschieden ungleich H):
- z.B. die Darstellung α2,α5-arylierter 2,5-Bis(hydroxymethyl)furane): Ishii, Akihiko; Horikawa, Yasuaki; Takaki, Ikuo; Shibata, Jun; Nakayama, Juzo; Hoshino,-Masamatsu, Tetrahedron Lett. (1991), 32(34), 4313-16; Jang, Yong-Sung; Kim, Han-Je; Lee, Phil-Ho; Lee, Chang-Hee. Tetrahedron Lett. (2000), 41(16), 2919-2923, oder
- z.B. die Darstellung α2,α5-alkylierter 2,5-Bis(hydroxymethyl)furane): Krauss, Juergen; Unterreitmeier, Doris; Antlsperger, Dorothee, Archiv der Pharmazie, (2003), 336(8), 381-384.
- z.B. die Darstellung α2,α5-alkylierter 2,5-Bis(hydroxymethyl)tetrahydrofurane): Walba, D. M.; Wand, M. D.; Wilkes, M. C., J. Am. Chem. Soc., (1979), 101(15), 4396-4397.
   z.B. die Darstellung α2,α5-alkenylierter 2,5-Bis(hydroxymethyl)tetrahydrofurane): Morimoto, Yoshiki; Kinoshita, Takamasa; Iwai, Toshiyuki, Chirality (2002), 14(7), 578-586.

Auch die Synthese in 2,5-Position unsymmetrisch substituierter furanbasierender Diole dieser Art ist literaturbekannt, z.B. die Darstellung α2-alkylierter 2,5-Bis(hydroxy-methyl)tetrahydrofurane): Donohoe, Timothy J.; Williams, Oliver; Churchill, Gwydian H, Angew. Chem. Int. Ed. (2008), 47(15), 2869-2871; oder die Synthese α2-alkylierter, α5 alkinylierter 2,5-Bis(hydroxymethyl)tetrahydrofurane): Abe, Masato; Kubo, Akina; Yamamoto, Shuhei; Hatoh, Yoshinori; Murai, Masatoshi; Hattori, Yasunao; Makabe, Hidefumi; Nishioka, Takaaki; Miyoshi, Hideto. Biochemistry (2008), 47(23), 6260-6266;
oder die Darstellung α2,alkoxylierter 2,5-Bis(hydroxymethyl)furane: Lu, Dan; Li, Pingya; Liu, Jinping; Li, Haijun, CN 101544624 A.

Auch ist die Synthese der Thioanaloga (X=S) von (II) ist literaturbekannt [vgl. Kuszmann, J.; Sohar, P., Carbohydrate Research (1972), 21(1), 19-27].

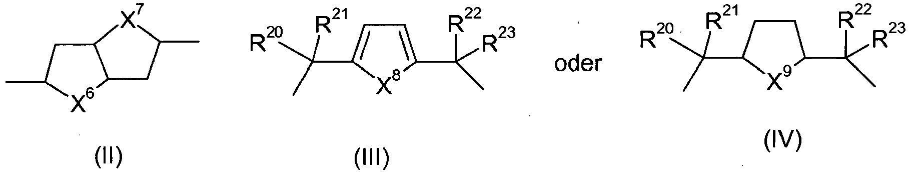

Ebenso ist die Synthese der Thioanaloga (X=S) von (**III**). [vgl. Garrigues, Bernard., Phosph., Sulfur and Silicon (1990), 53(1-4), 75-9.] bzw. substituierter Thioanaloga von **III**, z.B. α2,α5-arylierter 2,5-Bis(hydroxymethyl)thiophene bekannt [vgl. Kumaresan, D.; Agarwal, Neeraj; Gupta, Iti; Ravikanth, M. Tetrahedron (2002), 58(26), 5347-5356.]

Weiterhin ist die Synthese der Thioanaloga (X=S) von (**IV**) beschrieben [vgl. Luttringhaus, A.; Merz, H. Archiv der Pharmazie und Berichte der Deutschen Pharmazeutischen Gesellschaft (1960), 293 881-890.] bzw. substituierter Thioanaloga von **IV**, z.B. α2,α5-alkylierter 2,5-Bis(hydroxymethyl)tetrahydrothiophene bekannt [vgl. Block, Eric; Ahmad, Saleem. Phosph. Sulfur and the Related Elements (1985), 25(2), 139-145.]

Die furan- oder thiophenbasierten Diole liegen teilweise in enantiomeren- bzw. diastereomerenreiner Form vor. Die furan- oder thiophenbasierten Diole können in Form ihrer reinen Enantiomere oder Diastereomere eingesetzt werden. Bevorzugt sind jedoch Mischungen der respektiven Konfigurationsisomere.

Die zur Synthese der Flammschutzagonisten notwendigen Chlorphosphorderivate sind üblicherweise kommerziell erhältlich oder lassen sich über in der Literatur gut bekannte Synthesewege darstellen [vgl. Science of Synthesis (former Houben Weyl) 42 (2008**)**; Houben Weyl E1-2 (1982**)**; Houben Weyl 12 (1963-1964**)**].

Weiterhin bevorzugt als Phosphorverbindungen b) sind oligomere oder polymere Phosphate der Formel (VII), wobei die Symbole und Indices in der Formel (VII) folgende Bedeutung haben:
- R³⁰: ist bevorzugt Phenyl.
- Z: ist bevorzugt

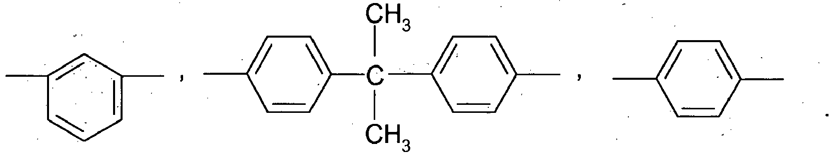

- n: ist bevorzugt 1 bis 50, besonders bevorzugt 1 bis 10.

Bevorzugt sind Verbindungen der Formel VII, bei denen alle Symbole und Indizes die bevorzugten Bedeutungen haben.

Besonders bevorzugte Verbindungen der Formel (VII) sind die Verbindungen (VII-1) und (VII-2):

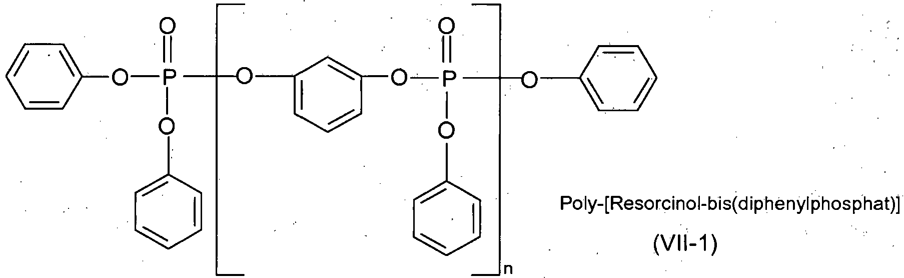

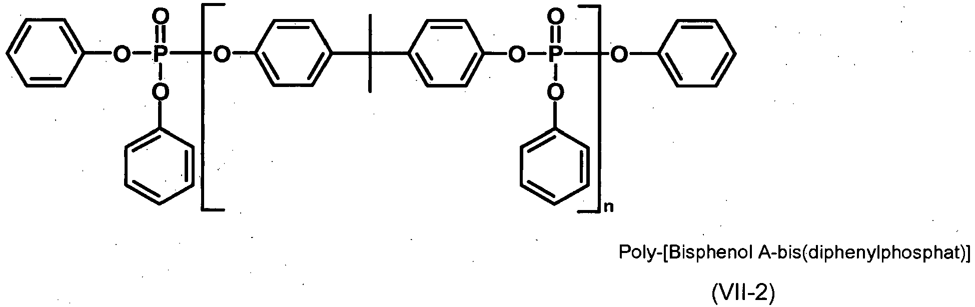

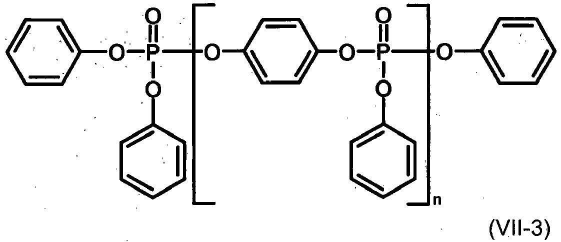

Die Verbindungen der Formel (VII) sind bekannt und teilweise kommerziell erhältlich, z.B. die Verbindung (VII-1) unter der Bezeichnung Fyrolflex^{®} RDP von der ICL-IP-Europe BV, und die Verbindung (VII-2) unter der Bezeichnung Fyrolflex^{®} BDP von der ICL-IP-Europe BV.

Weiterhin bevorzugt als Phosphorverbindungen b) sind oligomere oder polymeren Phosphonate der Formel (VIII), wobei die Symbole und Indices in der Formel (VIII) folgende Bedeutung haben:
R³¹ und R³⁴ sind bevorzugt Phenyl.
R³² und R³³ sind bevorzugt Phenyl, Methyl, Ethyl.
   - Z: ist bevorzugt

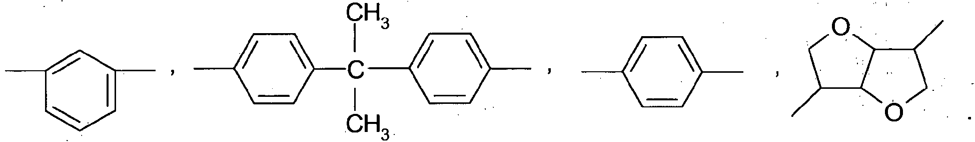

   - f: ist bevorzugt 1 bis 1000, besonders bevorzugt 100 bis 500.

Bevorzugt sind Verbindungen der Formel (VIII), bei denen alle Symbole und Indizes die bevorzugten Bedeutungen haben.

Besonders bevorzugte Verbindungen der Formel (VIII) sind die Verbindungen (VIII-1) und (VIII-2):

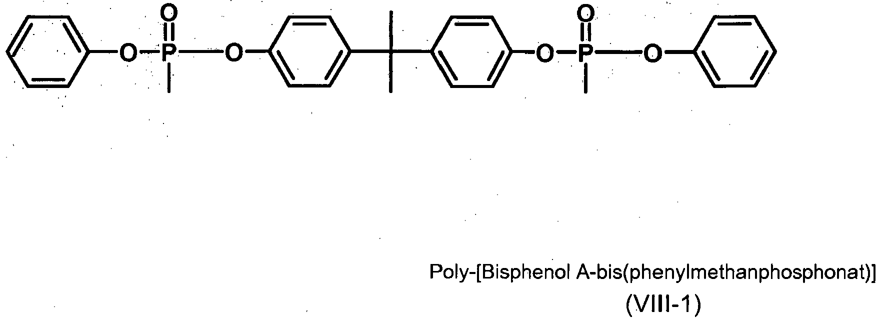

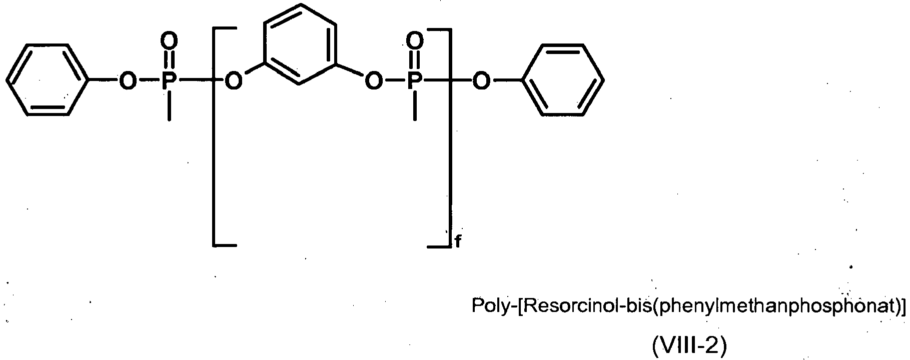

Die Verbindung der Formel (VIII) sowie Derivate hiervon sind bekannt und teilweise kommerziell erhältlich, z.B. die Verbindung (VIII-1) unter der Bezeichnung FRX100^{®} von FRX Polymers (USA). Das erfindungsgemäße Flammschutzsystem aus den genannten Schwefel- und Phosphorverbindungen wird in der Regel zum Schutz von Polymeren, insbesondere Polymerschäumen eingesetzt. Mengen von 2 bis 15 Gew.-Teile, bezogen auf das Polymer, bevorzugt 5 bis 10 Gew.-Teile, bezogen auf das Polymer, gewährleisten insbesondere bei Schaumstoffen aus expandierbaren Styrolpolymeren einen ausreichenden Flammschutz.

Ebenso bevorzugt ist der Einsatz in einer Menge im Bereich von 0,2 bis 20 Gew.-Teilen, bezogen auf das Polymer. Mengen von 0,5 bis 15 Gew.-Teilen, bezogen auf das Polymer, bevorzugt 0,75 bis 10 Gew.-Teilen, bezogen auf das Polymer, besonders bevorzugt 1 bis 5 Gew.-Teilen, bezogen auf das Polymer, gewährleisten insbesondere bei Schaumstoffen aus expandierbaren Styrolpolymeren einen ausreichenden Flammschutz.

Werden als Phosporverbindungen b) solche der Formel VII eingesetzt, beträgt die Menge des erfindungsgemäßen Flammschutzsystems (d.h. die Summe der Komponenten a) und b)) bevorzugt ≤ 5 Gew.-Teile, bezogen auf 100 Gew.-Teile Polymer.

Die Angabe von Gewichtsteilen bezieht sich dabei im Rahmen dieser Anmeldung - soweit nicht anders angegeben - stets auf 100 Gew.-Teile der Verbindung, insbesondere des Polymers, das flammhemmend ausgerüstet wird, ohne Berücksichtigung von etwaigen Additiven.

Die Wirksamkeit des erfindungsgemäßen Flammschutzsystems kann durch den Zusatz weiterer geeigneter Flammschutzsynergisten, wie die thermischen Radikalbildner Dicumylperoxid, Di-tert-butylperoxid" noch weiter verbessert werden. In diesem Falle werden üblicherweise 0,05 bis 5 Gew.-Teile des Flammschutzsynergisten, bezogen auf das Polymer, eingesetzt. Ebenso bevorzugt ist der Einsatz von 2,5-Dimethyl-2,5-di-(*tert*-butyl-peroxy)hexin-3, Cumylhydroperoxid, 1,3-Bis-(*tert*-butylperoxyisopropyl)benzol und 1,4-Bis-(*tert*-butylperoxyisopropyl)benzol in den genannten Mengen.

Auch können zusätzlich weitere Flammschutzmittel, wie Melamin, Melamincyanurate, Metalloxide, Metallhydroxide, Phosphate, Phosphonate, DOPO (9,10-Dihydro-9-oxa-10-phosphaphenanthren-10-oxid) oder DOPO-Derivate, Phosphinate, Phosphite, Phosphinite, Blähgraphit oder Synergisten wie Sb₂O₃, Sn-Verbindungen oder Nitroxyl-Radikale enthaltende oder freisetzende Verbindungen, eingesetzt werden. Geeignete zusätzliche halogenfreie Flammschutzmittel sind beispielsweise im Handel unter den Bezeichnungen Exolit^{®} OP 930, Exolit^{®} OP 1312, HCA^{®}, HCA-HQ^{®}, Cyagard^{®} RF-1243, Fyrol^{®} PMP, Phoslite^{®} IP-A, Melapur^{®} 200, Melapur^{®} MC oder Budit^{®} 833 erhältlich.

Falls auf die vollständige Halogenfreiheit verzichtet werden kann, können halogenreduzierte Materialien durch die Verwendung des erfindungsgemäßen Flammschutzmittels und den Zusatz geringerer Mengen an halogenhaltigen, insbesondere bromierten Flammschutzmitteln, wie Hexabromcyclododecan (HBCD) oder bromierten Styrolhomo- bzw. Styrolcopolymeren/-oligomeren (z.B. Styrol-Butadien-Copolymeren, wie in WO-A 2007/058736 beschrieben), bevorzugt in Mengen im Bereich von 0,05 bis 1, insbesondere 0,1 bis 0,5 Gew.- Teile (bezogen auf das Polymer), hergestellt werden.

In einer bevorzugten Ausführungsform ist das erfindungsgemäße Flammschutzsystem halogenfrei.

Besonders bevorzugt ist die Zusammensetzung aus Polymer, Flammschutzsystem und weiteren Zusatzstoffen halogenfrei.

Bei dem erfindungsgemäß zu schützenden Material handelt es sich vorzugsweise um eine Polymerzusammensetzung, d.h. eine Zusammensetzung, die ein oder mehrere Polymere enthält und bevorzugt aus einem oder mehreren Polymeren besteht. Bevorzugt sind thermoplastische Polymere. Besonders bevorzugt ist die Polymerzusammensetzung ein Schaumstoff.

Die erfindungsgemäßen Flammschutzsysteme werden bevorzugt für die Herstellung flammhemmend ausgerüsteter (bzw. flammgeschützter) Polymere, insbesondere thermoplastischer Polymere, verwendet. Hierfür werden die Flammschutzsysteme vorzugsweise physikalisch mit dem entsprechenden Polymer in der Schmelze vermischt und dann entweder als Polymermischung mit Phosphorgehalten zwischen 0,05 Gew.-Teile und 5 Gew.-Teile und Schwefelgehalten zwischen 0,1 Gew.-Teile und 10 Gew.-Teile (bezogen auf das Polymer) zunächst fertig konfektioniert und dann in einem zweiten Verfahrensschritt zusammen mit demselben oder mit einem anderen Polymer weiterverarbeitet. Alternativ ist im Falle von Styrolpolymeren auch der Zusatz des erfindungsgemäßen Flammschutzsystems vor, während und/oder nach der Herstellung durch Suspensionspolymerisation bevorzugt.

Gegenstand der Erfindung ist auch eine, vorzugsweise thermoplastische Polymerzusammensetzung, enthaltend eine oder mehrere Polymere und das erfindungsgemäße Flammsch utzsystem.

Als Polymer können beispielsweise geschäumte oder ungeschäumte Styrolpolymere, einschließlich ABS, ASA, SAN, AMSAN, SB und HIPS Polymere, Polyimide, Polysulfone, Polyolefine wie Polyethylen und Polypropylen, Polyacrylate, Polyetheretherketone, Polyurethane, Polycarbonate, Polyphenylenoxide, ungesättigte Polyesterharze, Phenolharze, Aminoplaste, Epoxidharze, Polyamide, Polyethersulfone, Polyetherketone und Polyethersulfide, jeweils einzeln oder in Mischung als Polymerblends eingesetzt werden.

Bevorzugt sind thermoplastische Polymere, wie geschäumte oder ungeschäumte Styrolhomopolymere und -copolymere jeweils einzeln oder in Mischung als Polymerblends.

Bevorzugt sind flammgeschützte Polymerschaumstoffe, insbesondere auf Basis von Styrolpolymeren, vorzugsweise EPS und XPS.

Die flammgeschützten Polymerschaumstoffe weisen (nach ISO 845) bevorzugt eine Dichte im Bereich von 5 bis 150 kg/m³, besonders bevorzugt im Bereich von 10 bis 50 kg/m³, auf und sind bevorzugt zu mehr als 80 %, besonders bevorzugt zu 90 bis 100 % geschlossenzellig.

Erfindungsgemäße flammgeschützte, expandierbare Styrolpolymere (EPS) und Styrol-polymerextrusionsschaumstoffe (XPS) können durch Zugabe des Treibmittels und des erfindungsgemäßen Flammschutzsystems vor, während oder nach der Suspensionspolymerisation oder durch Einmischen eines Treibmittels und des erfindungsgemäßen Flammschutzsystems in die Polymerschmelze und anschließende Extrusion und Granulierung unter Druck zu expandierbaren Granulaten (EPS) oder durch Extrusion und Entspannung unter Verwendung entsprechend geformter Düsen zu Schaumstoffplatten (XPS) oder Schaumstoffsträngen verarbeitet werden.

Erfindungsgemäß umfasst der Begriff Styrolpolymer Polymere, auf Basis von Styrol, alpha-Methylstyrol oder Mischungen von Styrol und alpha-Methylstyrol; analog gilt dies für den Styrolanteil in SAN, AMSAN, ABS, ASA, MBS und MABS (siehe unten). Erfindungsgemäße Styrolpolymere basieren auf mindestens 50 Gew.-% Styrol und/oder alpha-Methylstyrol Monomeren.

In einer bevorzugten Ausführungsform ist das Polymer ein expandierbares Polystyrol (EPS).

In einer weiteren bevorzugten Ausführungsform ist der Schaumstoff ein Styrolpolymerextrusionsschaumstoff (XPS).

Bevorzugt weisen expandierbare Styrolpolymere ein Molekulargewicht M_{w} im Bereich von 180.000 bis 300.000 g/mol, gemessen mittels Gelpermeationschromatographie mit refraktiometrischer Detektion (RI) gegenüber Polystyrolstandards, auf. Aufgrund des Molekulargewichtsabbaus durch Scherung und/oder Temperatureinwirkung liegt das Molekulargewicht des expandierbaren Polystyrols in der Regel etwa 10.000 bis 40.000 g/mol unter dem Molekulargewicht des eingesetzten Polystyrols. Das zahlenmittlere Molekulargewicht Mₙ ist bevorzugt kleiner als 120.000 g/mol.

Bevorzugt sind als Styrolpolymere glasklares Polystyrol (GPPS), Schlagzähpolystyrol (HIPS), anionisch polymerisiertes Polystyrol- oder Schlagzähpolystyrol (A-IPS), Styrolalpha-Methylstyrol-Copolymere, Acrylnitril-Butadien-Styrolpolymerisate (ABS), StyrolButadien-Copolymere (SB), Styrol-Acrylnitril-Copolymere (SAN), Acrylnitril-alpha-Methylstyrol-Copolymere (AMSAN), Styrol-Maleinsäureanhydrid-Copolymere (SMA), Styrol-Methylmethacrylat-Copolymere (SMMA), Styrol-N-Phenylmaleinimid-Copolymere (SPMI), Acrylnitril-Styrol-Acrylester (ASA), Methylmethacrylat-Butadien-Styrol (MBS), Methylmethacrylat-Acrylnitril-Butadien-Styrol (MABS)-polymerisate oder Mischungen davon oder mit Polyphenylenether (PPE).

Die genannten Styrolpolymere können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden. Des Weiteren sind Mischungen in den genannten Mengenbereichen auch mit z. B hydrophob modifizierten oder funktionalisierten Polymeren oder Oligomeren, Kautschuken, wie Polyacrylaten oder Polydienen, z.B. Styrol-Butadien-Blockcopolymeren oder biologisch abbaubaren aliphatischen oder aliphatisch/aromatischen Copolyestern möglich.

Als Verträglichkeitsvermittler eignen sich z.B. Maleinsäureanhydrid-modifizierte Styrolcopolymere, epoxidgruppenhaltige Polymere oder Organosilane.

Der Styrolpolymerschmelze können auch Polymerrecyklate der genannten thermoplastischen Polymeren, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel ein oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolymerschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt. Für XPS wird bevorzugt CO₂ oder dessen Mischungen mit Alkoholen und/oder C₂-C₄-Carbonylverbindungen, insbesondere Ketonen, eingesetzt.

Zur Verbesserung der Verschäumbarkeit können feinverteilte Innenwassertröpfchen in die Styrolpolymermatrix eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischer oder statischer Mischer erreicht werden. In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymere (EPS) ein Expansionsvermögen α, definiert als Schüttdichte vor dem Verschäumen/Schüttdichte nach dem Verschäumen höchstens 125 bevorzugt 15 bis 100 aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Des Weiteren können der Styrolpolymerschmelze Additive, Keimbildner, Füllstoffe, Weichmacher, lösliche und unlösliche anorganische und/oder organische Farbstoffe und Pigmente, z.B. IR-Absorber, wie Ruß, Graphit oder Aluminiumpulver sowie weitere athermane Materialien gemeinsam oder räumlich getrennt, z.B. über Mischer oder Seitenextruder zugegeben werden. In der Regel werden die Farbstoffe und Pigmente in Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein ein Dispergierhilfsmittel, z.B. Organosilane, epoxygruppenhaltige Polymere oder Maleinsäureanhydrid-gepfropfte Styrolpolymere, einzusetzen. Bevorzugte Weichmacher sind Mineralöle, Phthalate, die in Mengen von 0,05 bis 10 Gew.-%, bezogen auf das Styrolpolymerisat, eingesetzt werden können. Analog können diese Stoffe auch vor, während oder nach der Suspensionspolymerisation zu erfindungsgemäßem EPS zugegeben werden.

Zur Herstellung der erfindungsgemäßen expandierbaren Styrolpolymerisate nach dem Granulierverfahren kann das Treibmittel in die Polymerschmelze eingemischt werden. Ein mögliches Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
- Polymerisationsreaktor - statischer Mischer/Kühler - Granulator
- Polymerisationsreaktor - Extruder - Granulator
- Extruder- statischer Mischer- Granulator
- Extruder- Granulator.

Weiterhin kann die Anordnung Seitenextruder zur Einbringung von Additiven, z.B. von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polystyrolschmelze beheizt. Bevorzugt liegt die Temperatur der Düsenplatte im Bereich von 20 bis 100°C über der Temperatur der treibmittelhaltigen Polystyrolschmelze. Dadurch werden Polymerablagerungen in den Düsen verhindert und eine störungsfreie Granulierung gewährleistet.

Um marktfähige Granulatgrößen zu erhalten, sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Besonders bevorzugt ist ein Verfahren zur Herstellung von halogenfrei flammgeschützten, expandierbaren Styrolpolymeren (EPS), umfassend die Schritte
a) Einmischen eines organischen Treibmittels und 1-25 Gew.-% des erfindungsgemäßen Flammschutzsystems in die Polymerschmelze mittels eines statischen oder dynamischen Mischers bei einer Temperatur von mindestens 150°C,
b) Kühlen der treibmittelhaltigen Styrolpolymerschmelze auf eine Temperatur von mindestens 120°C
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

Bevorzugt ist es auch, die expandierbaren Styrolpolymere (EPS) durch Suspensionspolymerisation in wässriger Suspension in Gegenwart des erfindungsgemäßen Flammschutzsystems und eines organischen Treibmittels herzustellen.

Bei der Suspensionspolymerisation wird als Monomer bevorzugt Styrol allein eingesetzt. Es kann jedoch zu bis zu 20 % seines Gewichts durch andere ethylenisch ungesättigte Monomere, wie Alkylstyrole, Divinylbenzol, Acrylnitril, 1,1-Diphenylethen oder alpha-Methylstyrol ersetzt sein.

Bei der Suspensionspolymerisation können die üblichen Hilfsmittel, wie Peroxidinitiatoren, Suspensionsstabilisatoren, Treibmittel, Kettenüberträger, Expandierhilfsmittel, Keimbildner und Weichmacher zugesetzt werden. Das erfindungsgemäße Flammschutzmittel wird bei der Polymerisation in Mengen von 0,5 bis 25 Gew.-%, vorzugsweise von 5 bis 15 Gew.-%, zugesetzt. Treibmittel werden in Mengen von 2 bis 10 Gew.-%, bezogen auf Monomer zugesetzt. Man kann sie vor, während oder nach der Polymerisation der Suspension zusetzen. Geeignete Treibmittel sind zum Beispiel aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat einzusetzen.

Bei der Suspensionspolymerisation entstehen perlförmige, im Wesentlichen runde Teilchen mit einem mittleren Durchmesser im Bereich von 0,2 bis 2 mm.

Zur Verbesserung der Verarbeitbarkeit können die fertigen expandierbaren Styrolpolymergranulate durch Glycerinester, Antistatika oder Antiverklebungsmittel beschichten werden.

Das EPS Granulat kann mit Glycerinmonostearat GMS (typischerweise 0,25 %), Glycerintristearat (typischerweise 0,25 %) feinteiliger Kieselsäure Aerosil R972 (typischerweise 0,12 %) und Zn-Stearat (typischerweise 0,15 %), sowie Antistatikum beschichtet werden.

Die expandierbaren Styrolpolymergranulate können in einem ersten Schritt mittels Heißluft oder Wasserdampf zu Schaumpartikeln mit einer Dichte im Bereich von 5 bis 200 kg/m³, insbesondere 10 bis 50 kg/m³ vorgeschäumt und in einem zweiten Schritt in einer geschlossenen Form zu Partikelformteilen verschweißt werden.

Die expandierbaren Polystyrolteilchen können zu Polystyrolschaumstoffen mit Dichten von 8 bis 200 kg/m³ bevorzugt von 10 bis 50 kg/m³, verarbeitet werden. Hierzu werden die expandierbaren Partikel vorgeschäumt. Dies geschieht zumeist durch Erwärmen der Partikel mit Wasserdampf in sogenannten Vorschäumern. Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach dem Abkühlen können die Formteile entnommen werden.

In einer weiteren bevorzugten Ausführungsform ist der Schaumstoff ein extrudiertes Polystyrol (XPS), erhältlich durch:
(a) Erhitzen einer Polymerkomponente P zur Ausbildung einer Polymerschmelze,
(b) Einbringen einer Treibmittelkomponente T in die Polymerschmelze zur Ausbildung einer schäumbaren Schmelze,
(c) Extrusion der schäumbaren Schmelze in einen Bereich niedrigeren Drucks unter Aufschäumen zu einem Extrusionsschaum und
(d) Zugabe des erfindungsgemäßen Flammschutzsystems sowie gegebenenfalls weiterer Hilfs- und Zusatzstoffe in mindestens einem der Schritte a) und/oder b).

Erfindungsgemäße Schaumstoffe auf Basis von Styrolpolymeren, insbesondere EPS und XPS, eignen sich beispielsweise zur Verwendung als Dämm- und/oder Isolierstoffe, insbesondere in der Bauindustrie. Ebenso bevorzugt ist die Verwendung als Verpackungsmaterialien. Bevorzugt ist eine Verwendung als halogenfreies Dämm- und/oder Isoliermaterial, insbesondere in der Bauindustrie.

Erfindungsgemäße Schaumstoffe, insbesondere auf Basis von Styrolpolymeren, wie EPS und XPS, zeigen bevorzugt eine Verlöschzeit (Brandtest B2 nach DIN 4102 nach einer Ablagerungszeit von 72 h und, wenn nicht anders angegeben, einer Schaumstoffdichte von 15 g/l) von ≤ 15 sec, besonders bevorzugt ≤ 10 sec, und erfüllen damit die Bedingungen zum Bestehen des genannten Brandtests, solange die Flammenhöhedie in der Norm angegebene Messmarke nicht überschreitet.

Die Erfindung wird durch die nachfolgenden Beispiele näher erläutert, ohne sie dadurch zu beschränken.

### Beispiele

### Komponente a) Di- und Polysulfide (I)

| | | |
|---|---|---|
| 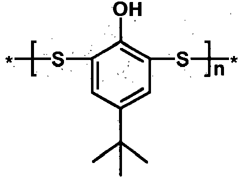 | Poly-(*tert*-Butylphenoldisulfid) | SV1 |
| 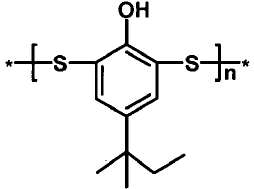 | Poly-(*tert*-Amylphenoldisulfid) | SV2 |
| 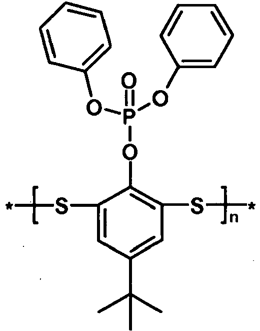 | Phosphatiertes Poly-(*tert-*Butylphenoldisulfid) | SV3 |

### Komponente b) Phosphorverbindungen

| | | |
|---|---|---|
| 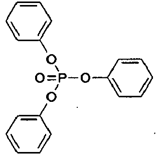 | Triphenylphosphat | PV1 |
| 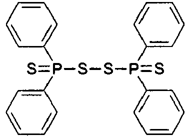 | Bis(diphenylphosphinothioyl)disulfid | PV2 |
| 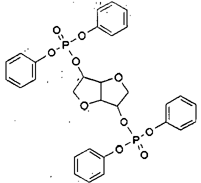 | Phosphorsäure-6-(diphenoxy-phosphoryloxi)-hexahydro-furo[3,2-b]-furan-3ylester diphenylester | PV3 |
| | | |
| 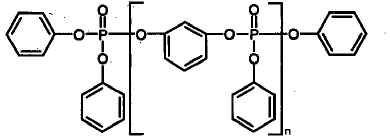 | Poly-[Resorcinol bis(diphenyl phosphat)] | PV4 |
| 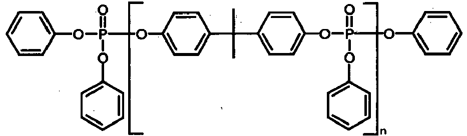 | Poly-[Bisphenol A-bis(diphenyl phosphat)] | PV5 |

Bei den in den Versuchen eingesetzte Schwefelverbindungen SV1 und SV2 handelt es sich um kommerziell erhältliche Verbindungen der Firma Arkema, die als Vultac 2 bzw. Vultac 3 und Vultac TB7 im Handel sind. Die Verbindung SV3 wurde gemäß nachfolgend angegebener Synthesevorschrift synthetisiert.

### Polyphosphatierung von Poly-(tert-Butylphenoldisulfid) (SV3)

### Apparatur

1000 mL-Rührapparatur, Argoninertisierung

### Ansatz:

| | | |
|---|---|---|
| 42,6g | (0,1 mol) | Poly-(*tert*-Butylphenoldisulfid) |
| 22,3g | (0,22mol) | Triethylamin |
| 53,7g | (0,2mol) | Chlordiphenylphosphat |
| 250ml | | Methylenchlorid |

In einer 1 L-Standardrührapparatur wurde Poly-(*tert*-Butylphenoldisulfid) (42,6 g 0,1 mol) in Methylenchlorid (250 mL) und Triethylamin (22,3 g, 0,22 mol) bei Raumtemperatur (RT) eingebracht. Bei 23 bis 31 °C wurde Chlordiphenylphosphat (53,7 g, 0,2 mol) innerhalb von 30 min unter Rühren zugetropft. Eine exotherme Reaktion war zu beobachten. Der Ansatz wurde 4,5 h bei 40 °C Ölbadtemperatur nachgerührt, anschließend auf R.T. abgekühlt. Hierbei bildeten sich 2 Phasen aus. Reaktionskontrolle der dunklen, klaren Unterphase via ³¹P-NMR indizierte quantitativen Umsatz. Das Reaktionsgemisch wurde mit entionisiertem Wasser (3 x 200 mL) gewaschen, die resultierende organische Phase wurde über Na₂SO₄ über Nacht getrocknet. Das Na₂SO₄ wurde abgesaugt und mit Methylenchlorid (1x 100 mL) nachgewaschen. Das Filtrat wurde am Rotationsverdampfer im Vakuum eingeengt (65 °C, 77 mbar) und anschließend 4 h bei 60°C am Ölpumpenvakuum getrocknet.

Das Produkt wurde als gelbbraunes Harz (83,3 g, 99 % d.Th.) erhalten, Reinheit >98 % (basierend auf P-NMR).

### Analytische Daten:

³¹P-NMR (CDCl₃), [ppm] : (-17.4)-(-18.6) Multiplett.

Die in den Versuchen eingesetzten organischen Phosphorverbindungen PV 1 bis 5 wurden nach bekannten Vorschriften synthetisiert oder kommerziell erworben:
**PV1**: Disflamoll TP (Lanxess)
**PV2**: M. G. Zimin; N. G. Zabirov; V. Smirnov; Zhournal Obschei Khimii; 1980; 50; 1; 24-30.
**PV3**:
   Synthese von Isosorbid-bis-diphenylphosphat:

### Apparatur:

4000 ml-Rührapparatur, Argoninertisierung

### Ansatz:

298,2 g (2,0 mol) Isosorbid 98 %
506 g (5,0 mol) Triethylamin
2000 mL Toluol
1120 g (4,0 mol) Chlordiphenylphosphat 96 %

In einer 4 L-Standardrührapparatur wird aufgeschmolzenes Isosorbid (298,2 g, 2 mol) in Toluol (2000 mL) bei RT eingebracht. Hierbei fällt ein Großteil des Isosorbids wieder aus. Der Ansatz wird auf 80°C erwärmt (90% des Isosorbids sind gelöst). Die Lösung wird anschließend wieder auf RT kommen gelassen. Bei 22 bis 42°C wird Chlordiphenylphosphat (1120 g, 4,0 mol) innerhalb von 5 h zugetropft. Der gelbe, trübe Ansatz wird über Nacht bei RT nachgerührt. Reaktionskontrolle via 31P-NMR indiziert quantitativen Umsatz.

Das ausgefallene Triethylammoniumchlorid wird über eine Schlenckfritte (Stickstoffinertisiert) absaugt und mit Toluol (1x 300 mL) nachgewaschen. Das Filtrat wird mit gesättigter, wässriger Na₂CO₃-Lösung (2 x 500 mL) ausgeschüttelt, anschließend mit Wasser (2 x 500 mL) gewaschen und über Na₂SO₄ über Nacht getrocknet. Das Na₂SO₄ wird abgesaugt und mit Toluol (1x 300 mL) nachgewaschen. Das Filtrat wird am Rotationsverdampfer im Vakuum eingeengt (65 °C, 77 mbar), anschließend 4 h bei 80°C am Ölpumpenvakuum getrocknet.
Das Produkt wird als rotbraunes Öl (1046g, 86 % d.Th.) erhalten, Reinheit > 96 % (basierend auf 31 P-NMR).
Eine wässrige Emulsion des Produkts wies pH 5,0 auf.

### Analytische Daten:

³¹P-NMR (toluol*_{d8}*), [ppm] : -11.2 (d, ³J_{P,H}=7 Hz), -11.9 (d, ³J_{P,H}=7 Hz) (2 Isomere).
¹H-NMR (toluol*_{d8}*), [ppm] : 7.37-7.22 (m, 8 H, ar), 7.16-7.00 (m, 8 H, ar), 7.00-6.89 (m, 4H, ar), 5.15-5.01 (m, 1 H, CH_{isosorbid}), 4.95-4.82 (m, 1 H, CH_{isosorbid}), 4.62-4.52 (m, 1 H, CH_{isosorbid}), 4.50-4.40 (m, 1 H, CH_{isosorbid}), 4.08-3.96 (m, 1 H, CH_{isosorbid}), 3.83-3.71 (m, 1 H, CH_{isosorbid}), 3.69-3.59 (m, 1 H, CH_{isosorbid}), 3.59-3.47 (m, 1 H, CH_{isosorbid}).
- PV4:: Fyrolflex^{®} RDP (ICL-IP Europe BV)
- PV5:: Fyrolflex^{®} BDP (ICL-IP Europe BV)

### Beschreibung der Versuche:

Die Ermittlung des Brandverhaltens der Schaumstoffplatten erfolgte bei einer Schaumstoffdichte von 15 kg/m³ nach DIN 4102 (Brandtest B2).

Als Vergleichsversuch wurde Hexabromcyclododecan (im Folgenden als HBCD bezeichnet) eingesetzt.

### Expandierbare Styrolpolymerisate (Extrusionsprozess)

7 Gew.-Teile n-Pentan wurden in eine Polystyrolschmelze aus PS 148H (Mw = 240 000 g/mol, Mn = 87 000 g/mol bestimmt mittels GPC, RI-Detektor, PS als Standard) der BASF SE mit einer Viskositätszahl VZ von 83 ml/g eingemischt. Nach Abkühlen der treibmittelhaltigen Schmelze von ursprünglich 260°C auf eine Temperatur von 190°C, wurde eine Polystyrolschmelze, welche die in der Tabelle genannten Flammschutzmittel enthielt, über einen Seitenstromextruder in den Hauptstrom eingemischt (Tabelle 1 a).

In einigen Versuchen wurden 3,6 Gew.-Teile Graphit zu der Polymerschmelze zudosiert (Tabelle 1b).

Die angegebenen Mengen in Gew.-Teilen beziehen sich auf die gesamte Polystyrolmenge, 100 Teile.

Das Gemisch aus Polystyrolschmelze, Treibmittel und Flammschutzmittel wurde mit 60 kg/h durch eine Düsenplatte mit 32 Bohrungen (Durchmesser der Düsen 0,75 mm) gefördert. Mit Hilfe einer druckbeaufschlagten Unterwassergranulierung wurden kompakte Granulate mit enger Größenverteilung hergestellt.

Das Molekulargewicht der Granulate betrug 220 000 g/mol (Mw) bzw. 80 000 g/mol (Mn) (bestimmt mittels GPC, RI-Detektor, PS als Standard).

Durch Einwirkung von strömendem Wasserdampf wurden die Granulate vorgeschäumt und nach 12-stündiger Lagerung durch weitere Behandlung mit Wasserdampf in einer geschlossenen Form zu Schaumstoffblöcken einer Dichte von 15 kg/m³ verschweißt. Die Ermittlung des Brandverhaltens der Schaumstoffplatten erfolgte nach 72-stündiger Lagerung bei einer Schaumstoffdichte von 15 kg/m³ nach DIN 4102.

Die Ergebnisse sind in Tabelle 1 zusammengestellt:

**Tabelle 1 a: Brandverhalten von erfindungsgemäßen Polymerzusammensetzungen (Beispiele) und von Vergleichsbeispielen**

| **Beispiel** | **Flammschutzmittel** (Gew.-Teile bezogen auf Polystyrol) | **Synergist** (Gew.-Teile bezogen auf Polystyrol) | **Brandtest (B2 nach DIN 4102) / Verlöschzeit (s)** |
|---|---|---|---|
| **VB1** | - | - | nicht bestanden / brennt ab |
| **VB2** | HBCD (4,0) | - | bestanden / 6,4 s |
| **1** | PV1 (5,0) | SV1 (2,5) | bestanden / 9,7 s |
| **2** | PV2 (2,5) | SV2 (2,5) | bestanden / 12,1 s |
| **3** | PV3 (2,5) | SV1 (2,5) | bestanden / 5,6 s |
| **4** | PV3 (2,5) | SV2 (2,5) | bestanden / 7,6 s |
| **5** | PV2 (2,5) | SV3 (5,0) | bestanden / 9,1 s |
| **6** | PV4 (2,5) | SV3 (5,0) | bestanden / 9,5 s |
| **7** | PV4 (2,5) | SV1 (2,5) | bestanden / 8,6 s |
| **8** | PV4 (2,5) | SV2 (2,5) | bestanden / 7,2 s |
| **9** | PV1 (1,0) | SV1 (2,5) | bestanden / 7,5 s |
| **10** | PV1 (1,0) | SV2 (3,5) | bestanden / 7,1 s |
| **11** | PV3 (1,0) | SV1 (2,5) | bestanden / 9,3 s |
| **12** | PV3 (1,0) | SV2 (3,5) | bestanden / 8,6 s |
| **14** | PV4 (1,0) | SV1 (2,5) | bestanden / 6,5 s |
| **14** | PV4 (1,0) | SV2 (3,5) | bestanden / 7,8 s |

**Tabelle 1b: Brandverhalten von erfindungsgemäßen Potymerzusammensetzungen enthaltend 3,6 Gew.-Teile Graphit (Beispiele) und von Vergleichsbeispielen**

| **Beispiel** | **Flammschutzmittel** (Gew.-Teile bezogen auf Polystyrol) | **Synergist** (Gew.-Teile bezogen auf Polystyrol) | **Brandtest (B2 nach DIN 4102) / Verlöschzeit (s)** |
|---|---|---|---|
| **VB3** | - | - | nicht bestanden / brennt ab |
| **VB4** | HBCD (4,0) | - | bestanden / 8,1 s |
| **15** | PV1 (1,0) | SV1 (2,5) | bestanden / 5,0 s |
| **16** | PV1 (1,0) | SV2 (3,5) | bestanden / 8,8 s |
| **17** | PV3 (1,0) | SV1 (2,5) | bestanden / 7,9 s |
| **18** | PV3 (0,5) | SV1 (3,5) | bestanden / 8,2 s |
| **19** | PV3 (1,0) | SV2 (3,5) | bestanden / 7,5 s |
| **20** | PV4 (1,0) | SV1 (2,5) | bestanden / 3,8 s |
| **21** | PV4 (1,0) | SV2 (3,5) | bestanden / 4,5 s |
| **22** | PV5 (1,0) | SV1 (3,5) | bestanden / 5,6 s |
| **23** | PV5 (1,0) | SV2 (3,5) | bestanden / 9,2 s |

**Tabelle 2: Einfluss der Schaumstoffdichte von Polystyrolschaumstoffprüfkörpern hergestellt aus EPS auf das Brandergebnis**

| **Beispiel** | **Flammschutzmittel** (Gew.-Teile bezogen auf Polystyrol) | **Schaumstoffdichte [kg/m³]** (ISO 845) | **Brandtest (B2 nach DIN 4102) / Verlöschzeit (s)** |
|---|---|---|---|
| **3** | PV3 (2,5) + SV2 (2,5) | 14,8 | bestanden / 5,6 s |
| **24** | PV3 (2,5) + SV2 (2,5) | 25,2 | bestanden / 7,0 s |
| **25** | PV3 (2,5) + SV2 (2,5) | 51,6 | bestanden / 12,1 s |
| **26** | PV3 (2,5) + SV2 (2,5) | 111,8 | bestanden /14,5 s |

**Tabelle 3: Einfluss der Flammschutzmittel auf die Wärmeformbeständigkeit von Polystyrolschaumstoffprüfkörpern hergestellt aus EPS**

| **Beispiel** | **Flammschutzmittel** (Gew.-Teile bezogen auf Polystyrol) | **Wärmeformbeständigkeit** (nach DIN EN 1604; Lineare Maßänderung nach 48 h, 70 °C) **(%)** |
|---|---|---|
| **VB1** | - | 0,0 |
| **VB2** | HBCD (4,0) | 0,5 |
| **1** | PV1 (5,0) + SV1 (2,5) | 2,1 |
| **2** | PV2 (2,5) + SV2 (2,5) | 1,5 |
| **3** | PV3 (2,5) + SV1 (2,5) | 1,5 |
| **4** | PV3 (2,5) + SV2 (2,5) | 1,7 |
| **7** | PV4 (2,5) + SV1 (2,5) | 1,9 |
| **8** | PV4 (2,5) + SV2 (3,5) | 2,0 |
| **9** | PV1 (1,0) + SV1 (2,5) | 0,7 |
| **10** | PV1 (1,0) + SV2 (3,5) | 0,9 |
| **11** | PV3 (1,0) + SV1 (2,5) | 0,5 |
| **12** | PV3 (1,0) + SV1 (3,5) | 0,6 |
| **13** | PV4 (1,0) + SV1 (2,5) | 0,7 |
| **14** | PV4 (1,0) + SV2 (3,5) | 0,8 |

**Tabelle 4: Einfluss der Flammschutzmittel auf die Druckspannung von Polystyrolschaumstoffprüfkörpern hergestellt aus EPS**

| **Bsp.** | **Flammschutzmittel** (Gew.-Teile bezogen auf Polystyrol) | **Druckspannung (kPa)** (nach ISO 844) |
|---|---|---|
| *VB2* | *HBCD (4*,*0)* | 75,2 |
| 1 | PV1 (5,0)+SV1 (2,5) | 71,6 |
| 3 | PV3 (2,5)+SV2 (2,5) | 73,3 |
| 4 | PV3 (2,5)+SV1 (2,5) | 72,7 |

### Styrolpolymerisate (Miniextruder-Experimente)

Polystyrol 158K wurde mit den jeweiligen Flammschutz-Additiven in einem Extruder (DSM Micro 15) bei 180 °C während 5 min extrudiert. Die Vicat-Teststäbe wurden mit einer Micro-Injection Moulding Machine 10cc, (Fa. DSM) spritzgegossen.

Die Ergebnisse der Vicat-Messungen sind in Tabelle 5 zusammengefasst.

**Tabelle 5: Einfluss der Flammschutzmittel auf die Vicat-Erweichungstemperatur von Polystyrolprüfkörpern**

| **Bsp.** | **Flammschutzmittel** (Gew.-Teile bezogen auf Polystyrol) | **Vicat-Erweichungstemperatur VST/B/50 (°C)** (nach ISO 306) |
|---|---|---|
| VB3 | - | 101 |
| VB4 | HBCD (4,0) | 96 |
| 27 | PV3 (2,5)+SV1 (2,5) | 93 |
| 28 | PV3 (1,0)+SV1(2.5) | 96 |
| 29 | PV3 (1,0)+SV3(2,5) | 95 |
| 30 | PV4 (1,0) + SV1 (2,5) | 96 |
| 31 | PV5 (1,0) + SV1 (2,5) | 96 |

### Extrudierte Polystyrol-Schaumstoffplatten

100 Gew.-Teile Polystyrol 158K (Mw = 261 000 g/mol, Mn = 77 000 g/mol bestimmt mittels GPC, RI-Detektor, PS als Standard) der BASF SE mit einer Viskositätszahl von 98 ml/g, 0,1 Teile Talkum als Keimbildner zur Regelung der Zellgröße und die in der Tabelle angegebenen Teile an Flammschutzmitteln sowie gegebenenfalls Schwefel werden einem Extruder mit einem inneren Schneckendurchmesser von 120 mm kontinuierlich zugeführt. Durch eine in den Extruder angebrachte Einlassöffnung wird gleichzeitig ein Treibmittelgemisch aus 3,25 Gew. Teilen Ethanol und 3,5 Gew. Teilen CO₂ kontinuierlich eingedrückt. Das in dem Extruder bei 180 °C gleichmäßig geknetete Gel wird durch eine Beruhigungszone geführt und nach einer Verweilzeit von 15 Minuten mit einer Austrittstemperatur von 105 °C durch eine 300 mm breite und 1,5 mm weite Düse in die Atmosphäre extrudiert. Der Schaum wird durch einen mit dem Extruder verbundenen Formkanal geführt, wobei eine geschäumte Plattenbahn mit einem Querschnitt 650 mm x 50 mm und einer Dichte von 35 g/l entsteht. Das Molekulargewicht des Polystyrols betrug 240 000 g/mol (Mw) bzw. 70 000 g/mol (Mn) (bestimmt mittels GPC, RI-Detektor, PS als Standard). Das Produkt wurde in Platten geschnitten. Geprüft wurde das Brandverhalten der Proben mit Dicken von 10 mm nach einer Ablagerungszeit von 30 Tagen nach DIN 4102.

Die Ergebnisse der Beispiele sind in der Tabelle 6 zusammengefasst.

**Tabelle 6: Brandverhalten von erfindungsgemäßen Polymerzusammensetzungen (Beispiele) und von Vergleichsbeispielen**

| **Beispiel** | **Flammschutzmittel** (Gew.-% bezogen auf Polystyrol) | **Synergist** (Gew.-% bezogen auf Polystyrol) | **Brandtest (B2 nach DIN 4102) / Verlöschzeit (s)** |
|---|---|---|---|
| **VB21** | - | - | nicht bestanden / brennt ab |
| **VB22** | HBCD (4,0) | - | bestanden / 7,2 s |
| **VB23** | PV3 (5,0) | - | nicht bestanden / brennt ab |
| **VB24** | PV4 (5,0) | - | nicht bestanden / brennt ab |
| **32** | PV3 (2,5) | SV1 (2,5) | bestanden / 5,8 s |
| **33** | PV3 (2,5) | SV2 (2,5) | bestanden / 7,7 s |
| **34** | PV3 (1,0) | SV1 (2,5) | bestanden / 6,1 s |
| **35** | PV3 (1,0) | SV2 (3,5) | bestanden / 5,5 s |
| **36** | PV3 (0,75) | SV1 (2,5) | bestanden / 6,0 s |
| **37** | PV3 (0,75) | SV2 (2,5) | bestanden / 8,4 s |
| **38** | PV3 (0,5) | SV1 (3,5) | bestanden / 3,9 s |
| **39** | PV3 (0,5) | SV2 (4,0) | bestanden / 7,0 s |
| **40** | PV1 (1,0) | SV1 (2,5) | bestanden / 5,3 s |
| **41** | PV4 (1,0) | SV1 (2,5) | bestanden / 4,4 s |
| **42** | PV4 (1,0) | SV2 (3,5) | bestanden / 6,3 s |
| **43** | PV5 (1,0) | SV1 (2,5) | bestanden / 8,8 s |
| **44** | PV5 (1,0) | SV2 (3,5) | bestanden / 9,1 s |

## Patentansprüche

1. Flammschutzsystem, enthaltend
a) mindestens eine Schwefelverbindung der Formel (I), 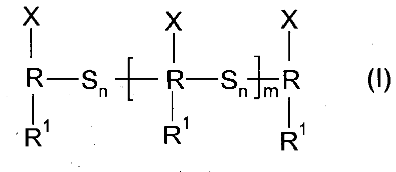 wobei die Symbole und Indizes folgende Bedeutungen haben:
R ist C₆-C₁₂-Aryl oder eine 5-10 gliedrige Heteroarylgruppe, die ein bis drei Heteroatome aus der Gruppe N, O und S enthält;
X ist OR², SR², NR²R³, COOR², CONR²R³, SO₂R², F, Cl, Br, H oder eine Gruppe Y¹-P(Y²)ₚR'R";
Y¹ ist O oder S;
Y² ist O oder S;
p ist 0 oder 1;
R', R" sind gleich oder verschieden C₁-C₁₈-Alkyl, C₂-C₁₈-Alkenyl, C₂-C₁₈-Alkinyl, C₃-C₁₀-Cycloalkyl, C₆-C₁₂-Aryl, C₆-C₁₂-Aryl-C₁-C₁₈-Alkyl, O-(C₁-C₁₈)-Alkyl, O-(C₃-C₁₀)-Cycloalkyl, O-(C₆-C₁₂)-Aryl, (C₆-C₁₂)-Aryl-(C₁-C₁₈)-Alkyl-O;
R¹ ist C₁-C₁₈ Alkyl, C₂-C₁₈-Alkenyl, C₃-C₁₈-Alkinyl, C₃-C₁₀-Cycloalkyl, O-(C₁-C₁₈)-Alkyl, O-(C₂-C₁₈)-Alkenyl, O-(C₃-C₁₈)-Alkinyl oder O-(C₃-C₁₀)-Cycloalkyl;
R², R³ sind gleich oder verschieden H, C₁-C₁₈-Alkyl, C₂-C₁₈-Alkenyl, C₃-C₁₈-Alkinyl, C₃-C₁₀-Cycloalkyl, C₆-C₁₀-Aryl oder C₆-C₁₀-Aryl-C₁-C₁₈-Alkyl;
n ist eine ganze Zahl von 2 bis 6 und
m ist eine Zahl von 2 bis 500.
b) mindestens eine halogenfreie organische Phosphorverbindung mit einem Phosphorgehalt im Bereich von 0,5 bis 40 Gew.-%, bezogen auf die Phosphorverbindung, wobei die Phosphorverbindung(en) b) gewählt sind aus
b') Phosphorverbindungen der Formel (II),
(X¹)ₛ =PR⁴R⁵R⁶ (II)
wobei die Symbole und Indizes in der Formel (II) folgende Bedeutungen haben:
R⁴ ist C₁-C₁₆-Alkyl, C₁-C₁₀Hydroxyalkyl, C₂-C₁₆-Alkenyl, C₁-C₁₆-Alkoxy, C₁-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR¹², COR¹³, COOR¹⁴, CONR¹⁵R¹⁶;
R⁵ ist C₁-C₁₆-Alkyl, C₁-C₁₀-Hydroxyalkyl, C₁-C₁₆-Alkenyl, C₁-C₁₆-Alkoxy, C₁-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR¹², COR¹³, COOR¹⁴, CONR¹⁵R¹⁶;
R⁶ ist H, SH, SR⁷, OH, OR⁸ oder eine Gruppe
-(Y³)ᵥ-[P(= X²)ᵤR⁹-(Y⁴)ₖ]ₗ-P(= X³)ₜR¹⁰R¹¹;
wobei zwei Gruppen R⁴, R⁵, R⁶ zusammen mit dem Phosphoratom, an das sie gebunden sind, kein Ringsystem bilden;
X¹, X², X³ sind gleich oder verschieden unabhängig voneinander O oder S;
Y³, Y⁴ sind gleich oder verschieden O oder S;
R⁷, R⁸, R¹², R¹³, R¹⁴, R¹⁵, R¹⁶ sind gleich oder verschieden C₁-C₁₂-Alkyl, C₃-C₈-Cycloalkyl, das unsubstituiert oder durch eine oder mehrere C₁-C₄-Alkylgruppen substituiert ist, C₂-C₁₂-Alkenyl, C₂-C₁₂-Alkinyl, C₆-C₁₀-Aryl, C₆-C₁₀-Aryl-C₁-C₄-alkyl oder Hydroxy-(C₁-C₁₈)-alkyl;
R⁹, R¹⁰, R¹¹ sind gleich oder verschieden unabhängig voneinander C₁-C₁₆-Alkyl, C₂-C₁₆-Alkenyl, C₁-C₁₆-Alkoxy, C₁-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR¹², COR¹³, COOR¹⁴, CONR¹⁵R¹⁶;
k, v sind 0 oder 1, falls Y³ bzw. Y⁴ O ist, und 1, 2, 3, 4, 5, 6, 7 oder 8, falls Y² bzw. Y⁴ S ist, und
l ist eine ganze Zahl von 0 bis 100;
s, t, u sind unabhängig voneinander 0 oder 1;
b") Phosphorverbindungen der Formel (III), 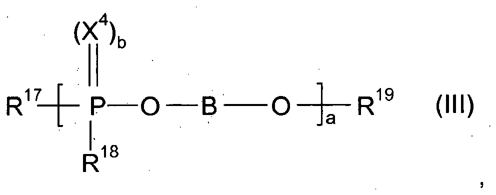 wobei die Symbole in der Formel (III) folgende Bedeutungen haben:
B ist eine Gruppe 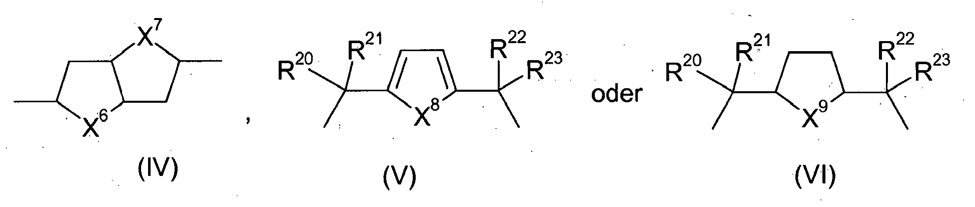
R¹⁹ ist -P(=X⁵)_{c}R²⁴R²⁵, H, eine geradkettige oder verzweigte C₁-C₁₂-Alkylgruppe, C₅-C₆-Cycloalkyl, C₆-C₁₂-Aryl, Benzyl, wobei die vier letztgenannten Gruppen unsubstituiert oder durch einen oder mehrere Reste aus der Gruppe C₁-C₄-Alkyl und C₂-C₄-Alkenyl substituiert sind;
R¹⁷, R¹⁸, R²⁴ und R²⁵ sind gleich oder verschieden Wasserstoff, OH, C₁-C₁₆-Alkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR²⁶ COR²⁷, COOR²⁸, CONR²⁹R³⁰ oder zwei Reste R¹⁷, R¹⁸, R²⁴, R²⁵ bilden zusammen mit dem Phosphoratom, an das sie gebunden sind, oder einer Gruppe P-O-B-O-P ein Ringsystem;
R²⁰, R²¹, R²², R²³ sind gleich oder verschieden H, C₁-C₁₆-Alkyl, C₂-C₁₆-Alkenyl, C₁-C₁₆-Alkoxy, C₂-C₁₆-Alkenoxy;
R²⁶, R²⁷, R²⁸, R²⁹, R³⁰ sind gleich oder verschieden H, C₁-C₁₆-Alkyl, C₂-C₁₆-Alkenyl, C₆-C₁₀-Aryl, C₆-C₁₀-Aryl-C₁-C₁₆-Alkyl, C₆-C₁₀-Aryl-C₁-C₁₆-Alkoxy;
X⁴, X⁵ sind gleich oder verschieden S oder O;
b, c sind gleich oder verschieden, vorzugsweise gleich, 0 oder 1;
X⁶, X⁷, X⁸, X⁹ sind gleich oder verschieden S oder O und
a ist eine natürliche Zahl von 1 bis 50.
b"') oligomeren oder polymeren Phosphaten der Formel (VII), 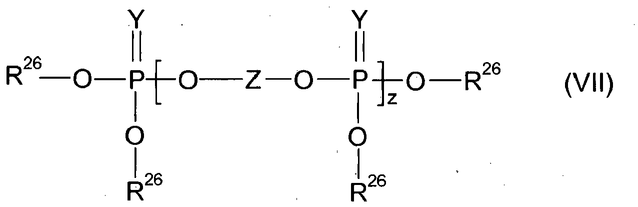 wobei die Symbole und Indizes folgende Bedeutungen haben:
R²⁶,R²⁷,R²⁸,R²⁹ sind gleich oder verschieden H, lineares oder verzweigtes C₁-C₁₆-Alkyl, lineares oder verzweigtes C₂-C₁₆-Alkenyl, lineares oder verzweigtes C₂-C₁₆-Alkinyl, C₃-C₁₀-Cycloalkyl, C₆-C₁₀-Aryl, Heteroaryl oder C₆-C₁₀-Aryl-C₁-C₁₀-Alkyl, wobei Aryl in den Resten R²⁶ - R²⁸ jeweils unabhängig voneinander unsubstituiert oder mit 1 bis 3 Resten aus der Gruppe C₁-C₁₀-Alkyl, C₁-C₁₀-Alkoxy, C₆-C₁₀-Aryl, C₆-C₁₀-Aryloxy, OH, CHO, COOH, CN, SH, SCH₃, SO₂CH₃, SO₂-C₆-C₁₀-Aryl, SO₃H, COCH₃, COC₂H₅, CO-C₆-C₁₀-Aryl und S-S-C₆-C₁₀-Aryl substituiert ist,
oder
R²⁶,R²⁷,R²⁸,R²⁹ sind ein kationischer Rest aus der Gruppe der Metalle und stickstoffhaltigen Kationen,
Z ist 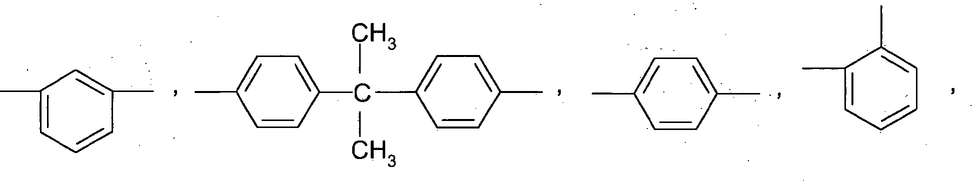 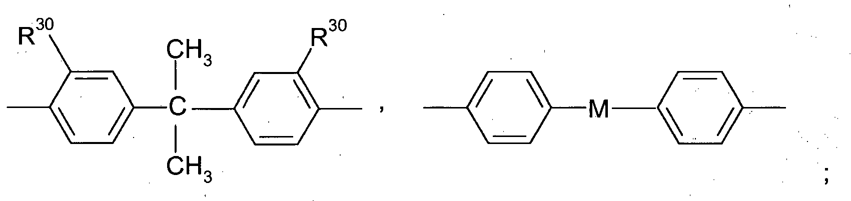
M ist -CH₂-, -C(CF₃)₂-, -C(CH₃)(C₆H₅)-, -C(CH₃)(C₂H₅)-, -C(C₆H₅)₂-1,3-Phenylen-C(CH₃)₂-, -C(CH₃)₂-1,4-Phenylen-C(CH₃)₂-, 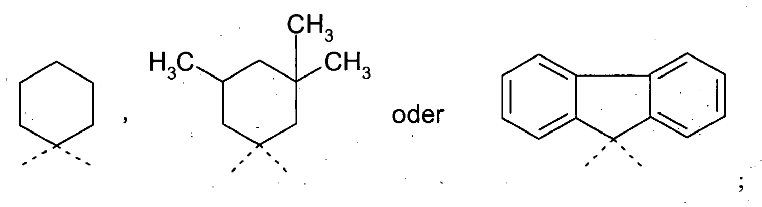
R³⁰ ist -CH₃, -CH(CH₃)₂ oder C₆H₅ und
n ist 1 bis 100;
b"") oligomeren oder polymeren Phosphonaten der Formel (VIII), 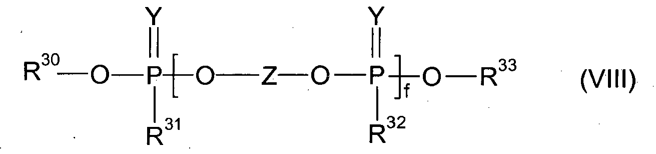 wobei die Symbole und Indizes folgende Bedeutungen haben:
R³⁰, R³¹, R³², R³³ sind gleich oder verschieden H, lineares oder verzweigtes C₁-C₁₆-Alkyl, lineares oder verzweigtes C₂-C₁₆-Alkenyl, lineares oder verzweigtes C₂-C₁₆-Alkinyl, C₃-C₁₀-Cycloalkyl, C₆-C₁₀-Aryl, Heteroaryl oder C₆-C₁₀-Aryl-C₁-C₁₀-Alkyl; wobei Aryl in den Resten R³⁰ - R³³ jeweils unabhängig voneinander unsubstituiert oder mit 1 bis 3 Resten aus der Gruppe C₁₋C₁₀-Alkyl, C₁-C₁₀-Alkoxy, C₆-C₁₀-Aryl, C₆-C₁₀-Aryloxy, OH, CHO, COOH, CN, SH, SCH₃, SO₂CH₃, SO₂-C₆-C₁₀-Aryl, SO₃H, COCH₃, COC₂H₅, CO-C₆-C₁₀-Aryl und S-S-C₆-C₁₀-Aryl substituiert ist;
Z ist 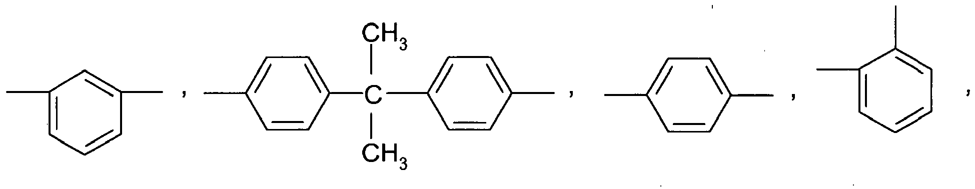 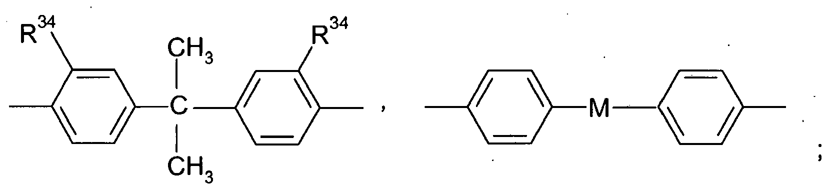
M ist -CH₂-, -C(CF₃)₂-, -C(CH₃)(C₆H₅)-, -C(CH₃)(C₂H₅)-, -C(C₆H₅)₂-1,3-Phenylen-C(CH₃)₂-, -C(CH₃)₂-1,4-Phenylen-C(CH₃)₂-, -O-, -S-, 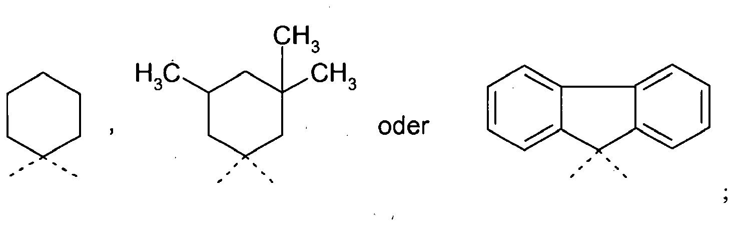
R³⁴ ist -CH₃, -CH(CH₃)₂ oder C₆H₅ und
f ist 1 bis 1000.

2. Flammschutzsystem gemäß Anspruch 1, wobei die Symbole in der Formel (I) folgende Bedeutungen haben:
R ist C₆-C₁₀-Aryl,
X ist OR², SR², NR²R³, COOR², COONR²R³, SO₂R² oder eine Gruppe Y¹-P(Y²)ₚR'R";
Y¹ ist O oder S;
Y² ist O oder S;
p ist 0 oder 1;
R', R" sind gleich und sind C₁-C₁₈-Alkyl, C₆-C₁₂-Aryl, O-(C₁-C₁₈)-Alkyl oder O-(C₆-C, ₂-Aryl;
R¹ ist C₁-C₁₆-Alkyl;
R², R³ sind gleich und sind H, C₁-C₁₈-Alkyl oder C₆-C₁₂-Aryl;
n st 2 - 4 und
m ist eine Zahl von 2 bis 250.

3. Flammschutzsystem gemäß Anspruch 1 oder 2, wobei die Verbindung(en) der Formel (I) ausgewählt sind aus Poly-(tert.-Butylphenoldisulfid-), Poly-(tert-Amylphenoldisulfid) und mit Diphenylphosphatgruppen phosphatiertem Poly-(tert.-Butylphenoldisulfid).

4. Verwendung einer Mischung der Flammschutzsynergisten a) und Flammschutzmittel b) gemäß einem der Ansprüche 1 bis 3 als Flammschutzsystem.

5. Verfahren zur flammhemmenden Ausrüstung von geschäumten oder ungeschäumten Polymeren, wobei man eine Schmelze des Polymers oder die Monomere, aus denen das Polymer erzeugt wird, mit dem Flammschutzsystem gemäß einem der Ansprüche 1 bis 3 vermischt.

6. Polymerzusammensetzung, enthaltend ein oder mehrere Polymere und ein Flammschutzsystem gemäß einem der Ansprüche 1 bis 3.

7. Polymerzusammensetzung gemäß Anspruch 6, enthaltend 0,1 bis 15 Gew.-Teile (bezogen auf 100 Gew.-Teile Polymer) an dem Flammschutzsystem.

8. Polymerzusammensetzung gemäß Anspruch 6 oder 7, **dadurch gekennzeichnet, dass** sie halogenfrei ist.

9. Polymerzusammensetzung gemäß einem der Ansprüche 6 bis 8, enthaltend ein Styrol polymer.

10. Polymerzusammensetzung gemäß einem der Ansprüche 6 bis 8, **dadurch gekennzeichnet, dass** das Polymer ein Schaumstoff ist.

11. Polymerzusammensetzung gemäß Anspruch 10, **dadurch gekennzeichnet, dass** der Polymerschaumstoff eine Dichte von 5 bis 150 g/l aufweist.

12. Polymerzusammensetzung gemäß Anspruch 9, in Form eines expandierbaren Styrolpolymers (EPS).

13. Verfahren zur Herstellung eines expandierbaren Styrolpolymers (EPS) gemäß Anspruch 12, umfassend die Schritte:
a) Einmischen eines organischen Treibmittels und eines Flammschutzsystems gemäß einem der Ansprüche 1 bis 3 sowie gegebenenfalls weiterer Hilfs- und Zusatzstoffe in eine Styrolpolymerschmelze mittels statischer und/oder dynamischer Mischer bei einer Temperatur von mindestens 150°C,
b) Kühlen der treibmittelhaltigen Styrolpolymerschmelze auf eine Temperatur von mindestens 120°C,
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

14. Verfahren zur Herstellung eines expandierbaren Styrolpolymers gemäß Anspruch 12, umfassend die Schritte:
a) Polymerisation einer oder mehrerer Styrolmonomere in Suspension;
b) Zugabe eines Flammschutzsystems gemäß einem der Ansprüche 1 bis 3 sowie gegebenenfalls weiterer Hilfs- und Zusatzstoffe vor, während und/oder nach der Polymerisation;
c) Zugabe eines organischen Treibmittels vor, während und/oder nach der Polymerisation und
d) Abtrennen der expadierbaren ein Flammschutzsystem gemäß einem der Ansprüche 1 bis 3 enthaltenden Styrolpolymerteilchen von der Suspension.

15. Polymerzusammensetzung gemäß Anspruch 9 in Form eines Styrolpolymerextrusionsschaumstoffes (XPS).

16. Polymerzusammensetzung gemäß einem der Ansprüche 9-12 oder 15, enthaltend als zusätzliche Komponente einen oder mehrere IR-Absorber.

17. Verfahren zur Herstellung eines Styrolextrusionsschaumstoffes (XPS) gemäß Anspruch 15, umfassend die Schritte:
a) Erhitzen einer Polymerkomponente P, die mindestens ein Styrolpolymer enthält, zur Ausbildung einer Polymerschmelze,
b) Einbringen einer Treibmittelkomponente T in die Polymerschmelze zur Ausbildung einer schäumbaren Schmelze,
c) Extrusion der schäumbaren Schmelze in einen Bereich niedrigeren Drucks unter Aufschäumen zu einem Extrusionsschaum und
d) Zugabe eines Flammschutzsystems gemäß einem der Ansprüche 1 bis 3 sowie gegebenenfalls weiterer Hilfs- und Zusatzstoffe in mindestens einem der Schritte a) und b).

18. Verfahren gemäß Anspruch 13 oder 17, wobei als Zusatzstoff ein oder mehrere IR-Absorber zugesetzt werden.

19. Verwendung einer halogenfreien Polymerzusammensetzung gemäß Anspruch 12 und/oder einer halogenfreien Polymerzusammensetzung gemäß Anspruch 15 in expandierter Form als Dämm- und/oder Isoliermaterial.

## Claims

1. A flame retardant system comprising
a) at least one sulfur compound of the formula (I), 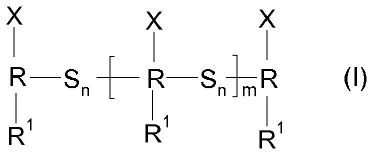 where the definitions of the symbols and indices are as follows:
R is C₆-C₁₂-aryl or a 5-10-membered heteroaryl group which comprises from one to three heteroatoms from the group of N, 0, and S;
X is OR², SR², NR²R³, COOR², CONR²R³, SO₂R², F, Cl, Br, H, or a Y¹-P(Y²)ₚR'R" group;
Y¹ is 0 or S;
Y² is 0 or S;
p is 0 or 1;
R' and R'', being identical or different, are C₁-C₁₈-alkyl, C₂-C₁₈-alkenyl, C₂-C₁₈-alkynyl, C₃-C₁₀-cycloalkyl, C₆-C₁₂-aryl, C₆-C₁₂-aryl-C₁-C₁₈-alkyl, O-(C₁-C₁₀)-alkyl, O-(C₃-C₁₀)-cycloalkyl, O-(C₆-C₁₂)-aryl, (C₆-C₁₂)-aryl-(C₁-C₁₀)-alkyl-O;
R¹ is C₁-C₁₈-alkyl, C₂-C₁₈-alkenyl, C₃-C₁₈-alkynyl, C₃-C₁₀-cycloalkyl, O-(C₁-C₁₈)-alkyl, O-(C₂-C₁₈)-alkenyl, O-(C₃-C₁₈)-alkynyl, or O-(C₃-C₁₀)-cycloalkyl;
R² and R³, being identical or different, are H, C₁-C₁₈-alkyl, C₂-C₁₈-alkenyl, C₃-C₁₈-alkynyl, C₃-C₁₀-cycloalkyl, C₆-C₁₀-aryl, or C₆-C₁₀-aryl-C₁-C₁₈-alkyl;
n is an integer from 2 to 6, and
m is a number from 2 to 500;
b) at least one halogen-free organophosphorus compound with phosphorus content in the range from 0.5 to 40% by weight, based on the phosphorus compound, where the phosphorus compound(s) b) has/have been selected from:
b') phosphorus compounds of the formula (II),
(X¹)ₛ =PR⁴R⁵R⁶ (II)
where the definitions of the symbols and indices in the formula (II) are as follows:
R⁴ is C₁-C₁₆-alkyl, C₁-C₁₀-hydroxyalkyl, C₂-C₁₆-alkenyl, C₁-C₁₆-alkoxy, C₁-C₁₆-alkenoxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, SR¹², COR¹³, COOR¹⁴, CONR¹⁵R¹⁶;
R⁵ is C₁-C₁₆-alkyl, C₁-C₁₀-hydroxyalkyl, C₁-C₁₆-alkenyl, C₁-C₁₆-alkoxy, C₁-C₁₆-alkenoxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, SR¹², COR¹³, COOR¹⁴, CONR¹⁵R¹⁶;
R⁶ is H, SH, SR⁷, OH, OR⁸ or a -(Y³))ᵥ-[P (=X²)ᵤR⁹- (Y⁴)ₖ]ₗ-P(=X³)ₜR¹⁰R¹¹ group;
where two groups R⁴, R⁵, or R⁶, together with the phosphorus atom bonded thereto, do not form a ring system;
X¹, X², and X³, being identical or different, are mutually independently 0 or S;
Y³ and Y⁴, being identical or different, are 0 or S;
R⁷, R⁸, R¹², R¹³, R¹⁴, R¹⁵, and R¹⁶, being identical or different, are C₁-C₁₂-alkyl or C₃-C₈-cycloalkyl which is unsubstituted or which has substitution by one or more C₁-C₄-alkyl groups, or are C₂-C₁₂-alkenyl, C₂-C₁₂-alkynyl, C₆-C₁₀-aryl, C₆-C₁₀-aryl-C₁-C₄-alkyl, or hydroxyl-(C₁-C₁₈)-alkyl;
R⁹, R¹⁰, and R¹¹, being identical or different, are mutually independently C₁-C₁₆-alkyl, C₂-C₁₆-alkenyl, C₁-C₁₆-alkoxy, C₁-C₁₆-alkenoxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, SR¹², COR¹³, COOR¹⁴, CONR¹⁵R¹⁶;
k and v are 0 or 1 if Y³ and, respectively, Y⁴ is 0, and are 1, 2, 3, 4, 5, 6, 7, or 8 if Y² and, respectively, Y⁴ is S, and
l is an integer from 0 to 100;
s, t, and u are mutually independently 0 or 1;
b'') phosphorus compounds of the formula (III), 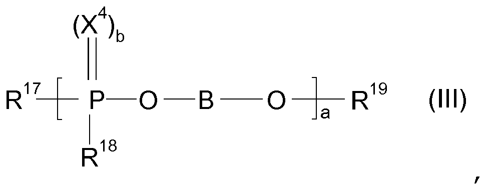 where the definitions of the symbols in the formula (III) are as follows:
B is a 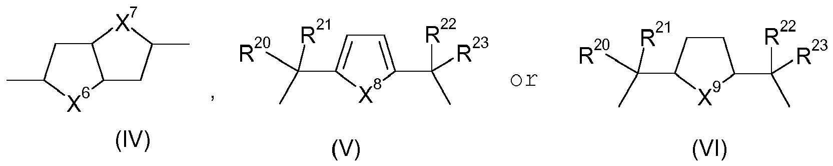 group,
R¹⁹ is -P(=X⁵)_{c}R²⁴R²⁵, H, a straight-chain or branched C₁-C₁₂-alkyl group, C₅-C₆-cycloalkyl, C₆-C₁₂-aryl, or benzyl, where the four last-mentioned groups are unsubstituted or have substitution by one or more radicals from the group of C₁-C₄-alkyl and C₂-C₄-alkenyl;
R¹⁷, R¹⁰, R²⁴, and R²⁵, being identical or different, are hydrogen, OH, C₁-C₁₆-alkyl, C₂-C₁₆-alkenyl, C₁-C₁₆-alkoxy, C₂-C₁₆,-alkenoxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, SR²⁶COR²⁷, COOR²⁸, CONR²⁹R³⁰, or two radicals R¹⁷, R¹⁸, R²⁴, or R²⁵ form, together with the phosphorus atom bonded thereto, or together with a P-O-B-O-P group, a ring system;
R²⁰, R²¹, R²², and R²³, being identical or different, are H, C₁-C₁₆-alkyl, C₂-C₁₆-alkenyl, C₁-C₁₆-alkoxy, C₂-C₁₆-alkenoxy;
R²⁶, R²⁷, R²⁸, R²⁹, and R³⁰, being identical or different, are H, C₁-C₁₀-alkyl, C₂-C₁₀-alkenyl, C₆-C₁₀-aryl, C₆-C₁₀-aryl-C₁-C₁₆-alkyl, C₆-C₁₀-aryl-C₁-C₁₆-alkoxy;
X⁴ and X⁵, being identical or different, are S or O;
b and c, being identical or different, preferably identical, are 0 or 1;
X⁶, X⁷, X⁸, and X⁹, being identical or different, are S or O, and
a is a natural number from 1 to 50;
b''') oligomeric or polymeric phosphates of the formula (VII), 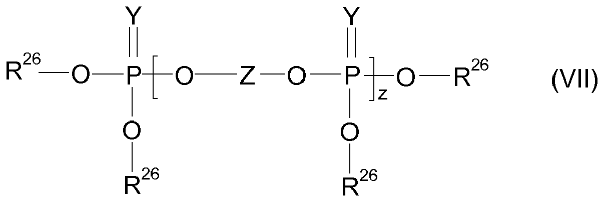
where the definitions of the symbols and indices are as follows:
R²⁶, R²⁷, R²⁸, and R²⁹, being identical or different, are H, linear or branched C₁-C₁₆-alkyl, linear or branched C₂-C₁₆-alkenyl, linear or branched C₂-C₁₆-alkynyl, C₃-C₁₀-cycloalkyl, C₆-C₁₀-aryl, heteroaryl, or C₆-C₁₀-aryl-C₁-C₁₀-alkyl, where aryl in the moieties R²⁶-R²⁸ is respectively mutually independently unsubstituted or has substitution by from 1 to 3 moieties from the group of C₁-C₁₀-alkyl, C₁-C₁₀-alkoxy, C₆-C₁₀-aryl, C₆-C₁₀-aryloxy, OH, CHO, COOH, CN, SH, SCH₃, SO₂CH₃, SO₂-Cr,-C₁₀-aryl, SO₃H, COCH₃, COC₂H₅, CO-C₆-C₁₀-aryl, and S-S-C₆-C₁₀-aryl,
or
R²⁶, R²⁷, R²⁸, and R²⁹ are a cationic moiety from the group of the metals and of nitrogen-containing cations,
Z is 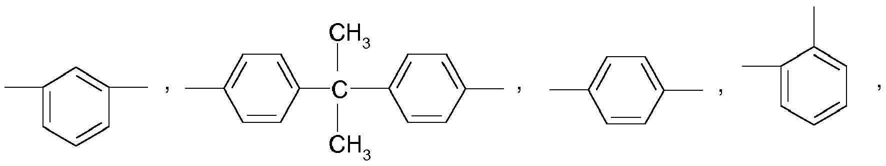 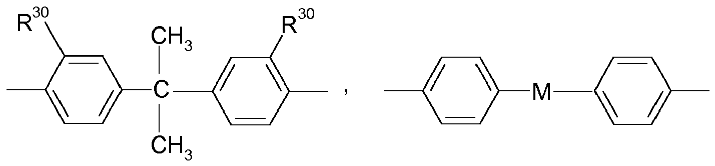
M is -CH₂-, -C(CF₃)₂-, -C (CH₃) (C₆H₅)-,-C(CH₃)(C₂H₅)-, -C(C₆H₅)₂-1,3-phenylene-C(CH₃)₂-,-C(CH₃)₂-1,4-phenylene-C(CH₃)₂-, 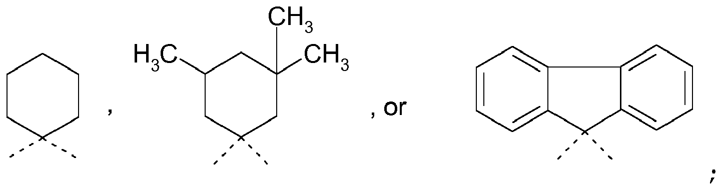
R³⁰ is -CH₃, -CH(CH₃)₂, or C₆H₅, and
n is from 1 to 100;
b'''') oligomeric or polymeric phosphonates of the formula (VIII), 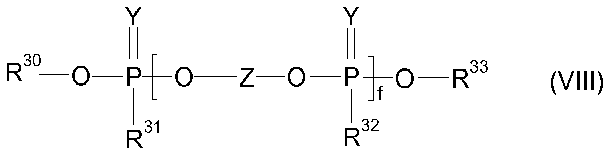
where the definitions of the symbols and indices are as follows:
R³⁰, R³¹, R³², and R³³, being identical or different, are H, linear or branched C₁-C₁₆-alkyl, linear or branched C₂-C₁₆-alkenyl, linear or branched C₂-C₁₆-alkynyl, C₃-C₁₀-cycloalkyl, C₆-C₁₀-aryl, heteroaryl, or C₆-C₁₀-aryl-C₁-C₁₀-alkyl; where aryl in the moieties R³⁰-R³³ is respectively mutually independently unsubstituted or has substitution by from 1 to 3 moieties from the group of C₁-C₁₀-alkyl, C₁-C₁₀-alkoxy, C₆-C₁₀-aryl, C₆-C₁₀-aryloxy, OH, CHO, COOH, CN, SH, SCH₃, SO₂CH₃, SO₂-C₆-C₁₀-aryl, SO₃H, COCH₃, COC₂H₅, CO-C₆-C₁₀-aryl, and S-S-C₆-C₁₀-aryl;
Z is 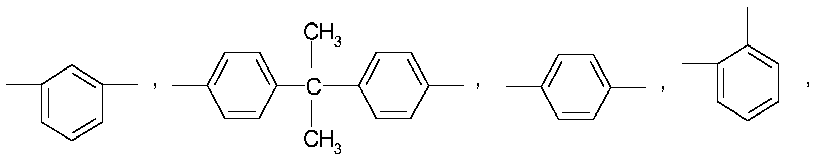 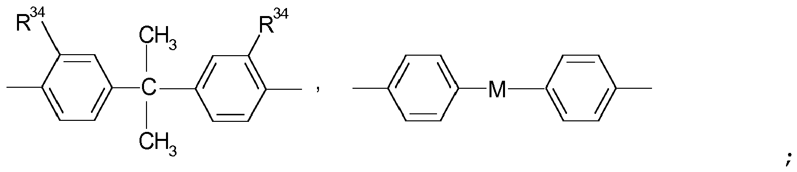
M is -CH₂-, -C(CF₃)₂-, -C(CH₃) (C₆H₅)-,-C(CH₃)(C₂H₅)-, -C(C₆H₅)₂-1,3-phenylene-C(CH₃)₂-,-C(CH₃)₂-1,4-phenylene-C(CH₃)₂-, -0-, -S-, 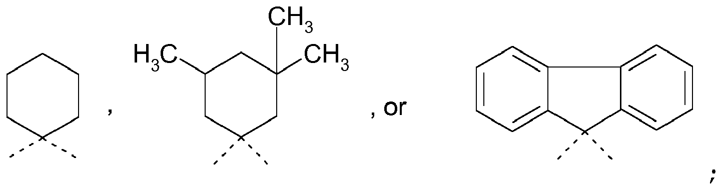
R³⁴ is -CH₃, -CH(CH₃)₂, or C₆H₅, and
f is from 1 to 1000.

2. The flame retardant system according to claim 1, where the definitions of the symbols in the formula (I) are as follows:
R is C₆-C₁₀₋aryl;
X is OR², SR², NR²R³, COOR², COONR²R³, SO₂R², or a Y¹-P(Y²)ₚR'R'' group;
Y¹ is 0 or S;
Y² is 0 or S;
p is 0 or 1;
R' and R'', being identical, are C₁-C₁₈-alkyl, C₆-C₁₂-aryl, O-(C₁-C₁₀)-alkyl, or O-(C₆-C₁₂) -aryl;
R¹ is C₁-C₁₆-alkyl;
R² and R³, being identical, are H, C₁-C₁₈-alkyl or C₆-C₁₂-aryl;
n is from 2 to 4, and
m is a number from 2 to 250.

3. The flame retardant system according to claim 1 or 2, where the compound(s) of the formula (I) has/have been selected from poly(tert-butylphenol disulfide), poly(tert-amylphenol disulfide), and poly(tertbutylphenol disulfide) phosphated with diphenyl phosphate groups.

4. The use of a mixture of the flame retardant synergists a) and flame retardant b) according to any of claims 1 to 3 as flame retardant system.

5. A process for rendering foamed or unfoamed polymers flame-retardant, where a melt of the polymer, or the monomers from which the polymer is produced, is/are mixed with the flame retardant system according to any of claims 1 to 3.

6. A polymer composition comprising one or more polymers and a flame retardant system according to any of claims 1 to 3.

7. The polymer composition according to claim 6, comprising from 0.1 to 15 parts by weight (based on 100 parts by weight of polymer) of the flame retardant system.

8. The polymer composition according to claim 6 or 7, which is halogen-free.

9. The polymer composition according to any of claims 6 to 8, comprising a styrene polymer.

10. The polymer composition according to any of claims 6 to 8, wherein the polymer is a foam.

11. The polymer composition according to claim 10, wherein the density of the polymer foam is from 5 to 150 g/l.

12. The polymer composition according to claim 9, in the form of an expandable styrene polymer (EPS).

13. A process for producing an expandable styrene polymer (EPS) according to claim 12, encompassing the following steps:
a) mixing to incorporate an organic blowing agent and a flame retardant system according to any of claims 1 to 3, and also optionally further auxiliaries and additives, into a styrene polymer melt by means of static and/or dynamic mixers at a temperature of at least 150°C,
b) cooling of the styrene polymer melt comprising blowing agent to a temperature of at least 120°C,
c) discharge via a die plate with holes of which the diameter at the exit from the die is at most 1.5 mm, and
d) pelletizing of the melt comprising blowing agent directly behind the die plate under water at a pressure in the range from 1 to 20 bar.

14. A process for producing an expandable styrene polymer according to claim 12, encompassing the following steps:
a) polymerizing one or more styrene monomers in suspension;
b) adding a flame retardant system according to any of claims 1 to 3, and also optionally further auxiliaries and additives prior to, during, and/or after the polymerization reaction;
c) adding an organic blowing agent prior to, during, and/or after the polymerization reaction, and
d) isolating the expandable styrene polymer particles comprising a flame retardant system according to any of claims 1 to 3 from the suspension.

15. The polymer composition according to claim 9 in the form of an extruded styrene polymer foam (XPS).

16. The polymer composition according to any of claims 9-12 or 15, comprising as additional component one or more IR absorbers.

17. A process for producing an extruded styrene foam (XPS) according to claim 15, encompassing the following steps:
a) heating a polymer component P which comprises at least one styrene polymer, to form a polymer melt,
b) introducing a blowing agent component T into the polymer melt to form a foamable melt,
c) extruding the foamable melt into a region of relatively low pressure, with foaming to give an extruded foam, and
d) adding a flame retardant system according to any of claims 1 to 3, and also optionally further auxiliaries and additives in at least one of the steps a) and b).

18. The process according to claim 13 or 17, where one or more IR absorbers are added as additive.

19. The use of a halogen-free polymer composition according to claim 12 and/or of a halogen-free polymer composition according to claim 15 in expanded form as insulation material.

## Revendications

1. Système ignifugeant, contenant
a) au moins un composé de soufre de formule (I) 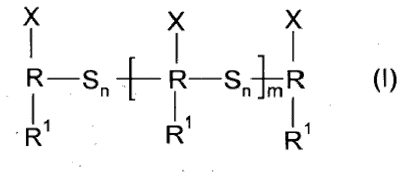 dans laquelle les symboles et les indices ont les significations suivantes :
R représente aryle en C₆-C₁₂ ou un groupe hétéroaryle de 5 à 10 éléments, qui contient un à trois hétéroatomes du groupe N, 0 et S ;
X représente OR², SR², NR²R³, COOR², CONR²R³, SO₂R², F, Cl, Br, H ou un groupe Y¹-P(Y²)ₚR'R'' ;
Y¹ représente 0 ou S ;
Y² représente 0 ou S ;
p représente 0 ou 1 ;
R', R'' sont identiques ou différents, et représentent alkyle en C₁-C₁₈, alcényle en C₂-C₁₈, alcynyle en C₂-C₁₈, cycloalkyle en C₃-C₁₀, aryle en C₆-C₁₂, aryle en C₆-C₁₂-alkyle en C₁-C₁₈-, 0-alkyle en C₁-C₁₈-, O-cycloalkyle en C₃-C₁₀, 0-aryle en C₆-C₁₂, aryle en C₆-C₁₂-alkyle en C₁-C₁₈-O ;
R¹ représente alkyle en C₁-C₁₈, alcényle en C₂-C₁₈, alcynyle en C₃-C₁₈-, cycloalkyle en C₃-C₁₀, 0-alkyle en C₁-C₁₈, O-alcényle en C₂-C₁₈, 0-alcynyle en C₃-C₁₈- ou O-cycloalkyle en C₃-C₁₀ ;
R², R³ sont identiques ou différents, et représentent H, alkyle en C₁-C₁₈, alcényle en C₂-C₁₈, alcynyle en C₃-C₁₈, cycloalkyle en C₃-C₁₀, aryle en C₆-C₁₀ ou aryle en C₆-C₁₀-alkyle en C₁-C₁₈ ;
n est un nombre entier de 2 à 6 ; et
m est un nombre de 2 à 500,
b) au moins un composé de phosphore organique sans halogène ayant une teneur en phosphore dans la plage allant de 0,5 à 40 % en poids, par rapport au composé de phosphore, le ou les composés de phosphore b) étant choisis parmi
b') les composés de phosphore de formule (II)
(X¹)ₛ=PR⁴R⁵R⁶ (II)
les symboles et les indices dans la formule (II) ayant les significations suivantes :
R⁴ représente alkyle en C₁-C₁₆, hydroxyalkyle en C₁-C₁₀, alcényle en C₂-C₁₆, alcoxy en C₁-C₁₆, alcénoxy en C₁-C₁₆, cycloalkyle en C₃-C₁₀, cycloalcoxy en C₃-C₁₀, aryle en C₆-C₁₀, aryloxy en C₆-C₁₀, aryle en C₆-C₁₀-alkyle en C₁-C₁₆, aryle en C₆-C₁₀-alcoxy en C₁-C₁₆, SR¹², COR¹³, COOR¹⁴, CONR¹⁵R¹⁶;
R⁵ représente alkyle en C₁-C₁₆, hydroxyalkyle en C₁-C₁₀, alcényle en C₁-C₁₆, alcoxy en C₁-C₁₆, alcénoxy en C₁-C₁₆, cycloalkyle en C₃-C₁₀, cycloalcoxy en C₃-C₁₀, aryle en C₆-C₁₀, aryloxy en C₆-C₁₀, aryle en C₆-C₁₀-alkyle en C₁-C₁₆, aryle en C₆-C₁₀-alcoxy en C₁-C₁₆, SR¹², COR¹³, COOR¹⁴, CONR¹⁵R¹⁶ ;
R⁶ représente H, SH, SR⁷, OH, OR⁸ ou un groupe
-(Y³)ᵥ-[P(= X²)ᵤR⁹-(Y⁴)ₖ]ₗ-P(= X³)ₜR¹⁰R¹¹
deux groupes R⁴, R⁵, R⁶ ne formant pas de système cyclique avec l'atome de carbone auquel ils sont reliés ;
X¹, X², X³ sont identiques ou différents, et représentent indépendamment les uns des autres 0 ou S ;
Y³, Y⁴ sont identiques ou différents, et représentent O ou S ;
R⁷, R⁸, R¹², R¹³, R¹⁴, R¹⁵, R¹⁶ sont identiques ou différents, et représentent alkyle en C₁-C₁₂, cycloalkyle en C₃-C₈, qui est non substitué ou substitué par un ou plusieurs groupes alkyle en C₁-C₄, alcényle en C₂-C₁₂, alcynyle en C₂-C₁₂, aryle en C₆-C₁₀, aryle en C₆-C₁₀-alkyle en C₁-C₄ ou hydroxy-alkyle en C₁-C₁₈ ;
R⁹, R¹⁰, R¹¹ sont identiques ou différents, et représentent indépendamment les uns des autres alkyle en C₁-C₁₆, alcényle en C₂-C₁₆, alcoxy en C₁-C₁₆, alcénoxy en C₁-C₁₆, cycloalkyle en C₃-C₁₀, cycloalcoxy en C₃-C₁₀, aryle en C₆-C₁₀, aryloxy en C₆-C₁₀, aryle en C₆-C₁₀-alkyle en C₁-C₁₆, aryle en C₆-C₁₀-alcoxy en C₁-C₁₆, SR¹², COR¹³, COOR¹⁴, CONR¹⁵R¹⁰ ;
k, v représentent 0 ou 1 si Y³ ou Y⁴ représente 0, et 1, 2, 3, 4, 5, 6, 7 ou 8 si Y² ou Y⁴ représente S ; et
l représente un nombre entier de 0 à 100 ;
s, t, u représentent indépendamment les uns des autres 0 ou 1
b'') les composés de phosphore de formule (III) 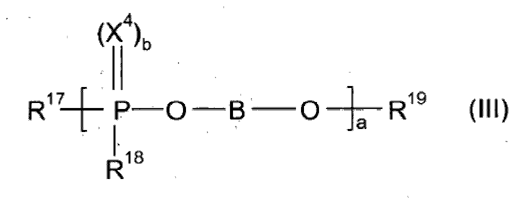 les symboles dans la formule (III) ayant les significations suivantes :
B représente un groupe 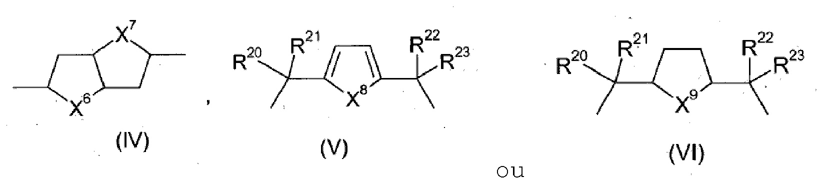
R¹⁹ représente -P(=X⁵)_{c}R²⁴R²⁵, H, un groupe alkyle en C₁-C₁₂ linéaire ou ramifié, cycloalkyle en C₅-C₆, aryle en C₆-C₁₂, benzyle, les quatre derniers groupes cités étant non substitués ou substitués par un ou plusieurs radicaux du groupe constitué par alkyle en C₁-C₄ et alcényle en C₂-C₄ ;
R¹⁷, R¹⁸, R²⁴ et R²⁵ sont identiques ou différents, et représentent hydrogène, OH, alkyle en C₁-C₁₆, alcényle en C₂-C₁₆, alcoxy en C₁-C₁₆, alcénoxy en C₂-C₁₆, cycloalkyle en C₃-C₁₀, cycloalcoxy en C₃-C₁₀, aryle en C₆-C₁₀, aryloxy en C₉-C₁₀, aryle en C₆-C₁₀-alkyle en C₁-C₁₆, aryle en C₉-C₁₀-alcoxy en C₁-C₁₆, SR²⁶, COR²⁷, COOR²⁸, CONR²⁹R³⁰, ou deux radicaux R¹⁷, R¹⁸, R²⁴, R²⁵ forment ensemble avec l'atome de phosphore auquel ils sont reliés ou un groupe P-O-B-O-P un système cyclique ;
R²⁰, R²¹, R²², R²³ sont identiques ou différents, et représentent H, alkyle en C₁-C₁₆, alcényle en C₂-C₁₆, alcoxy en C₁-C₁₆, alcénoxy en C₂-C₁₆ ;
R²⁶, R²⁷, R²⁸, R²⁹, R³⁰ sont identiques ou différents, et représentent H, alkyle en C₁-C₁₆, alcényle en C₂-C₁₆, aryle en C₆-C₁₀, aryle en C₆-C₁₀-alkyle en C₁-C₁₆, aryle en C₆-C₁₀-alcoxy en C₁-C₁₆ ;
X⁴, X⁵ sont identiques ou différents, et représentent S ou 0 ;
b, c sont identiques ou différents, de préférence identiques, et représentent 0 ou 1 ;
X⁶, X⁷, X⁸, X⁹ sont identiques ou différents, et représentent S ou 0 ; et
a est un nombre naturel de 1 à 50,
b''') les phosphates oligomères ou polymères de formule (VII) 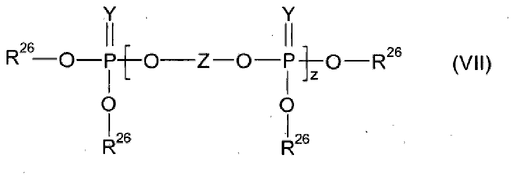 dans laquelle les symboles et les indices ont les significations suivantes :
R²⁶, R²⁷, R²⁰, R²⁹ sont identiques ou différents, et représentent H, alkyle en C₁-C₁₆ linéaire ou ramifié, alcényle en C₂-C₁₆ linéaire ou ramifié, alcynyle en C₂-C₁₆, linéaire ou ramifié, cycloalkyle en C₃-C₁₀, aryle en C₆-C₁₀, hétéroaryle ou aryle en C₆-C₁₀-alkyle en C₁-C₁₀, les aryles dans les radicaux R²⁶ à R²⁰ étant à chaque fois indépendamment les uns des autres non substitués ou substitués avec 1 à 3 radicaux du groupe constitué par alkyle en C₁-C₁₀, alcoxy en C₁-C₁₀, aryle en C₆-C₁₀, aryloxy en C₆-C₁₀, OH, CHO, COOH, CN, SH, SCH₃, SO₂CH₃, SO₂-aryle en C₆-C₁₀, SO₃H, COCH₃, COC₂H₅, CO-aryle en C₆-C₁₀ et S-S-aryle en C₆-C₁₀,
ou
R²⁶, R²⁷, R²⁰, R²⁹ représentent un radical cationique du groupe constitué par les métaux et les cations azotés,
Z représente 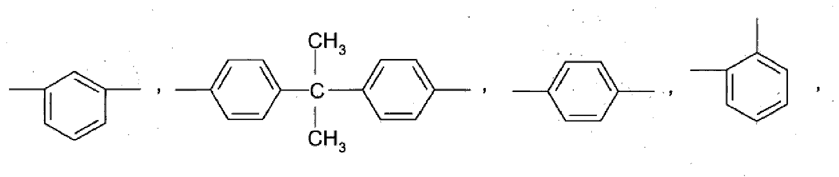 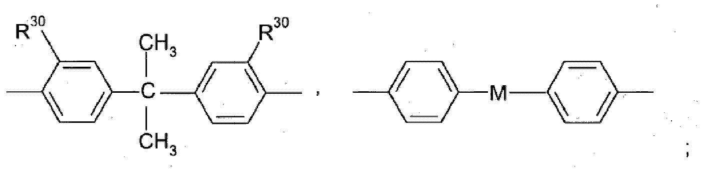
M représente -CH₂-, -C(CF₃)₂-, -C(CH₃)(C₆H₅)-,-C(CH₃)(C₂H₅)-, -C(C₆H₅)₂-1,3-phénylène-C(CH₃)₂-, -C(CH₃)₂-1,4-phénylène-C(CH₃)₂-, 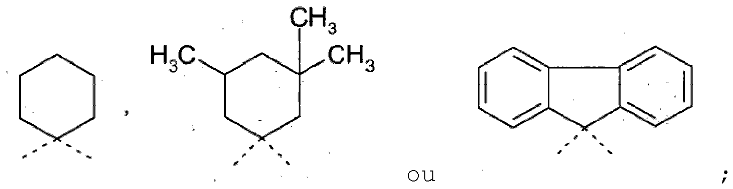
R³⁰ représente -CH₃, -CH(CH₃)₂ ou C₆H₅ ; et
n représente 1 à 100 ;
b'''') les phosphonates oligomères ou polymères de formule (VIII) 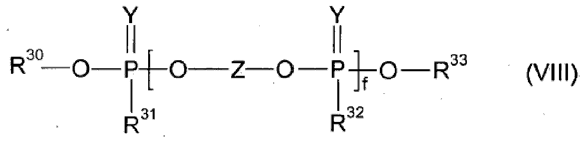 dans laquelle les symboles et les indices ont les significations suivantes :
R³⁰, R³¹, R³², R³³ sont identiques ou différents, et représentent H, alkyle en C₁-C₁₆ linéaire ou ramifié, alcényle en C₂-C₁₆ linéaire ou ramifié, alcynyle en C₂-C₁₆ linéaire ou ramifié, cycloalkyle en C₃-C₁₀, aryle en C₆-C₁₀, hétéroaryle ou aryle en C₆-C₁₀-alkyle en C₁-C₁₀ ;
les aryles dans les radicaux R³⁰ à R³³ étant à chaque fois indépendamment les uns des autres non substitués ou substitués avec 1 à 3 radicaux du groupe constitué par alkyle en C₁-C₁₀, alcoxy en C₁-C₁₀, aryle en C₆-C₁₀, aryloxy en C₆-C₁₀, OH, CHO, COOH, CN, SH, SCH₃, SO₂CH₃, SO₂-aryle en C₆-C₁₀, SO₃H, COCH₃, COC₂H₅, CO-aryle en C₆-C₁₀ et S-S-aryle en C₆-C₁₀ ;
Z représente 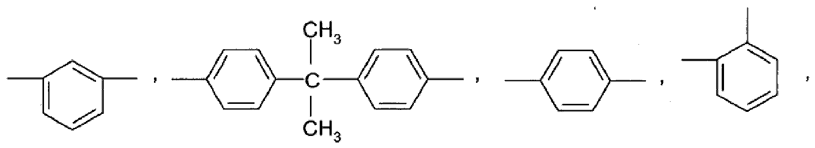 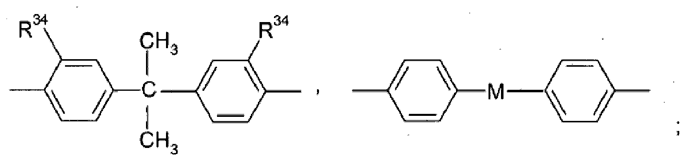
M représente -CH₂-, -C(CF₃)₂-, -C(CH₃)(C₆H₅)-,-C(CH₃)(C₂H₅)-, -C(C₆H₅)₂-1,3-phénylène-C(CH₃)₂-, -C(CH₃)₂-1,4-phénylène-C(CH₃)₂-, -0-, -S-, 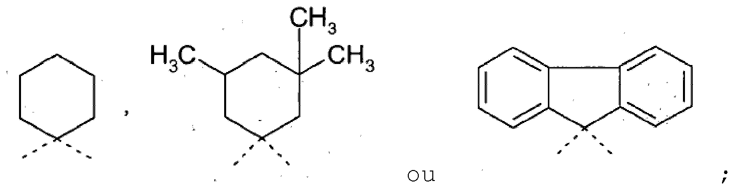
R³⁴ représente -CH₃, -CH(CH₃)₂ ou C₆H₅ ; et
f représente 1 à 1 000.

2. Système ignifugeant selon la revendication 1, dans lequel les symboles dans la formule (I) ont les significations suivantes :
R représente aryle en C₆-C₁₀ ;
X représente OR², SR², NR²R³, COOR², COONR²R³, SO₂R² ou un groupe Y¹-P(Y²)ₚR'R'' ;
Y¹ représente 0 ou S ;
Y² représente 0 ou S ;
P représente 0 ou 1 ;
R', R'' sont identiques ou différents, et représentent alkyle en C₁-C₁₈, aryle en C₆-C₁₂, 0-alkyle en C₁-C₁₈ ou 0-aryle en C₆-C₁₂ ;
R¹ représente alkyle en C₁-C₁₆ ;
R², R³ sont identiques, et représentent H, alkyle en C₁-C₁₈ ou aryle en C₆-C₁₂ ;
n représente 2 à 4 ; et
m est un nombre de 2 à 250.

3. Système ignifugeant selon la revendication 1 ou 2, dans lequel le ou les composés de formule (I) sont choisis parmi le poly(disulfure de tert.-butylphénol), le poly(disulfure de tert.-amylphénol) et le poly(disulfure de tert.-butylphénol) phosphaté avec des groupes diphénylphosphate.

4. Utilisation d'un mélange de synergistes ignifugeants a) et d'agents ignifugeants b) selon l'une quelconque des revendications 1 à 3 en tant que système ignifugeant.

5. Procédé d'ignifugation de polymères moussés ou non moussés, selon lequel une masse fondue du polymère ou des monomères à partir desquels le polymère est formé est mélangée avec le système ignifugeant selon l'une quelconque des revendications 1 à 3.

6. Composition polymère, contenant un ou plusieurs polymères et un système ignifugeant selon l'une quelconque des revendications 1 à 3.

7. Composition polymère selon la revendication 6, contenant 0,1 à 15 parties en poids (par rapport à 100 parties en poids de polymère) du système ignifugeant.

8. Composition polymère selon la revendication 6 ou 7, **caractérisée en ce qu'**elle est sans halogène.

9. Composition polymère selon l'une quelconque des revendications 6 à 8, contenant un polymère de styrène.

10. Composition polymère selon l'une quelconque des revendications 6 à 8, **caractérisée en ce que** le polymère est une mousse.

11. Composition polymère selon la revendication 10, **caractérisée en ce que** la mousse polymère présente une densité de 5 à 150 g/l.

12. Composition polymère selon la revendication 9, sous la forme d'un polymère de styrène expansible (EPS).

13. Procédé de fabrication d'un polymère de styrène expansible (EPS) selon la revendication 12, comprenant les étapes suivantes :
a) l'incorporation d'un agent gonflant organique et d'un système ignifugeant selon l'une quelconque des revendications 1 à 3, ainsi qu'éventuellement d'autres adjuvants et additifs, dans une masse fondue de polymère de styrène au moyen d'un mélangeur statique et/ou dynamique, à une température d'au moins 150 °C,
b) le refroidissement de la masse fondue de polymère de styrène contenant un agent gonflant à une température d'au moins 120 °C,
c) le déchargement au travers d'une plaque à buse munie d'alésages, dont le diamètre au niveau de la sortie de la buse est d'au plus 1,5 mm, et
d) la granulation de la masse fondue contenant un agent gonflant directement après la plaque à buse sous de l'eau à une pression dans la plage allant de 1 à 20 bar.

14. Procédé de fabrication d'un polymère de styrène expansible selon la revendication 12, comprenant les étapes suivantes :
a) la polymérisation d'un ou de plusieurs monomères de styrène en suspension ;
b) l'ajout d'un système ignifugeant selon l'une quelconque des revendications 1 à 3, ainsi qu'éventuellement d'autres adjuvants et additifs, avant, pendant et/ou après la polymérisation ;
c) l'ajout d'un agent gonflant organique avant, pendant et/ou après la polymérisation, et
d) la séparation des particules de polymère de styrène expansibles contenant un système ignifugeant selon l'une quelconque des revendications 1 à 3 de la suspension.

15. Composition polymère selon la revendication 9 sous la forme d'une mousse extrudée de polymère de styrène (XPS).

16. Composition polymère selon l'une quelconque des revendications 9 à 12 ou 15, contenant en tant que composant supplémentaire un ou plusieurs absorbeurs IR.

17. Procédé de fabrication d'une mousse extrudée de styrène (XPS) selon la revendication 15, comprenant les étapes suivantes :
a) le chauffage d'un composant polymère P, qui contient au moins un polymère de styrène, pour former une masse fondue de polymère,
b) l'introduction d'un composant agent gonflant T dans la masse fondue de polymère pour former une masse fondue moussable,
c) l'extrusion de la masse fondue moussable dans une zone de pression réduite avec moussage pour obtenir une mousse extrudée, et
d) l'ajout d'un système ignifugeant selon l'une quelconque des revendications 1 à 3, ainsi qu'éventuellement d'autres adjuvants et additifs, lors d'au moins une des étapes a) et b).

18. Procédé selon la revendication 13 ou 17, dans lequel un ou plusieurs absorbeurs IR sont ajoutés en tant qu'additif.

19. Utilisation d'une composition polymère sans halogène selon la revendication 12 et/ou d'une composition polymère sans halogène selon la revendication 15 sous forme expansée en tant que matériau amortissant et/ou isolant.
